# EUROPEAN PATENT SPECIFICATION

(11) **EP 0 992 904 B1**
(45) Date of publication and mention of the grant of the patent: **09.06.2010**
(21) Application number: 99400552.8
(22) Date of filing: 08.03.1999
(51) Int. Cl.: G06F 11/36

(54) **Cache coherence during emulation**
Cachespeicherkohärenz während der Emulation
Cohérence d'antémémoire pendant l'émulation

(30) Priority: 06.10.1998 EP 98402455
(43) Date of publication of application: 12.04.2000
(73) Proprietor: TEXAS INSTRUMENTS INC., Dallas, Texas 75243 (US); TEXAS INSTRUMENTS FRANCE, 06271 Villeneuve Loubet Cédex (FR)
(72) Inventor: Deao, Douglas E., Brookshire, TX 77423 (US); Buser, Mark.L, Pittsburgh, PA 15218 (US); Nidegger, Frederick, 06300 Nice (FR); Russell, David, Marlow, Bucks, SL7 2JN (GB)
(74) Representative: Holt, Michael

(56) References cited:
- EP-A- 0 854 422
- US-A- 5 263 153
- US-A- 5 530 804
- US-A- 5 742 791

## Description

### FIELD OF THE INVENTION

The present invention relates to digital microprocessors, and more particularly to emulating and debugging digital microprocessors.

### BACKGROUND OF THE INVENTION

Microprocessors are general purpose processors which require high instruction throughputs in order to execute software running thereon, and can have a wide range of processing requirements depending on the particular software applications involved. A cache internal to the microprocessor may provide shorter instruction access times.

Known microprocessor debugging environments provide code profiling capability which allows the amount of cycles or instructions required to execute a specified routine or piece of code to be determined. However, direct visibility of a cache internal to the microprocessor is not provided. Therefore, cache performance cannot generally be determined. Furthermore, reading or writing of instructions by a test host can corrupt the coherence of the internal cache.

Many different types of processors are known, of which microprocessors are but one example. For example, Digital Signal Processors (DSPs) are widely used, in particular for specific applications, such as mobile processing applications. DSPs are typically configured to optimize the performance of the applications concerned and to achieve this they employ more specialized execution units and instruction sets. Particularly in, but not exclusively, applications such as mobile telecommunications applications, it is desirable to provide ever increasing DSP performance while keeping power consumption as low as possible.

In this regard EP-A-0 854 422 describes a digital system being a microprocessor and US-A-5 742 791 concerns cache coherency during emulation.

The present invention provides apparatus and method as set forth in the claims.

### BRIEF DESCRIPTION OF THE DRAWINGS

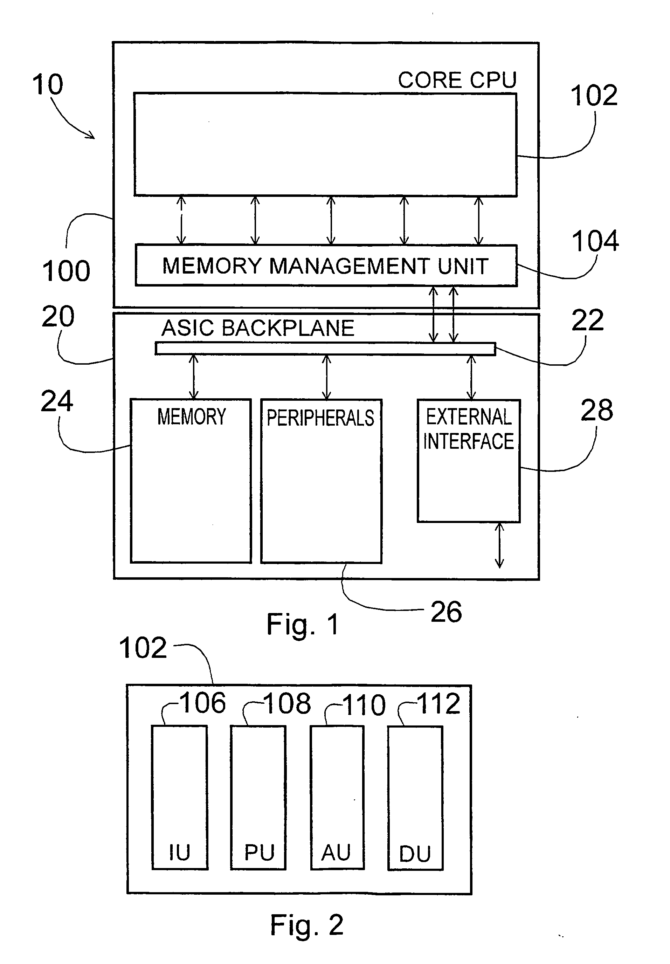

Particular embodiments in accordance with the invention will now be described, by way of example only, and with reference to the accompanying drawings in which like reference signs are used to denote like parts and in which the Figures relate to the processor of Figure 1, unless otherwise stated, and in which:
Figure 1 is a schematic block diagram of a digital system which includes a microprocessor in accordance with an embodiment of the invention;
Figure 2 is a schematic diagram of the processor core of Figure 1;
Figure 3 is a more detailed schematic block diagram of various execution units of the processor core;
Figure 4 is a schematic diagram of an instruction buffer queue and an instruction decoder of the processor;
Figure 5 is a schematic representation of the processor core for explaining the operation of the pipeline of the processor;
Figure 6 is a block diagram of the processor illustrating a memory management unit interconnected memory;
Figure 7 shows the unified structure of Program and Data memory spaces of the processor;
Figure 8 is a block diagram illustrating a digital system with the processor of Figure 1 and associated benchmarking circuitry, according to aspects of the present invention;
Figure 9A is a block diagram illustrating the emulation circuitry of Figure 8 in more detail;
Figure 9B is a block diagram illustrating the emulation interface circuitry of Figure 9A in more detail;
Figure 10A is a timing diagram illustrating a DT-DMA read request by the emulation circuitry of Figure 8;
Figure 10B is a timing diagram illustrating a DT-DMA write request by the emulation circuitry of Figure 8;
Figure 11 is a block diagram of the cache of Figure 8;
Figure 12 is a more detailed block diagram of the cache of Figure 8;
Figure 13 illustrates the memory structure of the cache of Figure 8;
Figure 14 illustrates direct mapped cache organization;
Figure 15 is a block diagram illustrating an alternative embodiment of a digital system with the processor of Figure 1, according to aspects of the present invention;
Figure 16 is a schematic representation of an integrated circuit incorporating the processor;
Figure 17 is a schematic representation of a telecommunications device incorporating the processor of Figure 1.

### DESCRIPTION OF THE PREFERRED EMBODIMENTS

Although the invention finds particular application to Digital Signal Processors (DSPs), implemented, for example, in an Application Specific Integrated Circuit (ASIC), it also finds application to other forms of processors.

The basic architecture of an example of a processor according to the invention will now be described. Processor 100 is a programmable fixed point DSP core with variable instruction length (8 bits to 48 bits) offering both high code density and easy programming. Architecture and instruction set are optimized for low power consumption and high efficiency execution of DSP algorithms as well as pure control tasks, such as for wireless telephones, for example. Processor 100 includes emulation and code debugging facilities.

Figure 1 is a schematic overview of a digital system 10 in accordance with an embodiment of the present invention. The digital system includes a processor 100 and a processor backplane 20. In a particular example of the invention, the digital system is a Digital Signal Processor System 10 implemented in an Application Specific Integrated Circuit (ASIC). In the interest of clarity, Figure 1 only shows those portions of microprocessor 100 that are relevant to an understanding of an embodiment of the present invention. Details of general construction for DSPs are well known, and may be found readily elsewhere. For example, U.S. Patent 5,072,418 issued to Frederick Boutaud, et al, describes a DSP in detail. U.S. Patent 5,329,471 issued to Gary Swoboda, et al, describes in detail how to test and emulate a DSP. Details of portions of microprocessor 100 relevant to an embodiment of the present invention are explained in sufficient detail herein below, so as to enable one of ordinary skill in the microprocessor art to make and use the invention.

As shown in Figure 1, processor 100 forms a central processing unit (CPU) with a processor core 102 and a memory interface unit 104 for interfacing the processor core 102 with memory units external to the processor core 102.

Processor backplane 20 comprises a backplane bus 22, to which the memory management unit 104 of the processor is connected. Also connected to the backplane bus 22 is an instruction memory 24, peripheral devices 26 and an external interface 28.

It will be appreciated that in other examples, the invention could be implemented using different configurations and/or different technologies. For example, processor 100 could form a first integrated circuit, with the processor backplane 20 being separate therefrom. Processor 100 could, for example be a DSP separate from and mounted on a backplane 20 supporting a backplane bus 22, peripheral and external interfaces. The processor 100 could, for example, be a microprocessor rather than a DSP and could be implemented in technologies other than ASIC technology. The processor or a processor including the processor could be implemented in one or more integrated circuits.

Figure 2 illustrates the basic structure of an embodiment of the processor core 102. As illustrated, this embodiment of the processor core 102 includes four elements, namely an Instruction Buffer Unit (I Unit) 106 and three execution units. The execution units are a Program Flow Unit (P Unit) 108, Address Data Flow Unit (A Unit) 110 and a Data Computation Unit (D Unit) 112 for executing instructions decoded from the Instruction Buffer Unit (I Unit) 106 and for controlling and monitoring program flow.

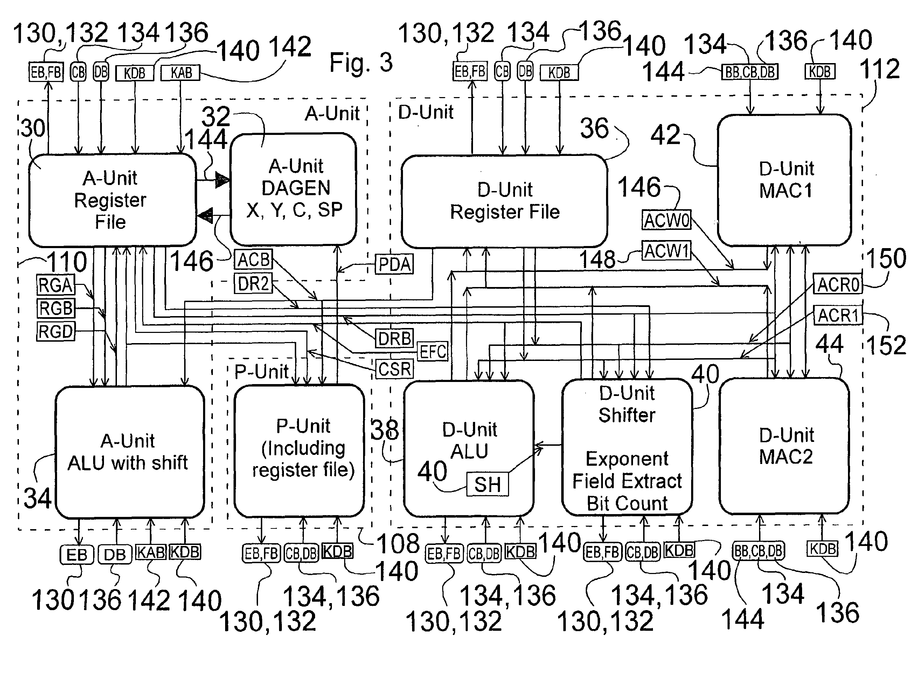

Figure 3 illustrates P Unit 108, A Unit 110 and D Unit 112 of the processor core 102 in more detail and shows the bus structure connecting the various elements of the processor core 102. The P Unit 108 includes, for example, loop control circuitry, GoTo/Branch control circuitry and various registers for controlling and monitoring program flow such as repeat counter registers and interrupt mask, flag or vector registers. The P Unit 108 is coupled to general purpose Data Write buses (EB,FB) 130,132, Data Read buses (CB,DB) 134,136 and a coefficient program bus (BB) 138. Additionally, the P Unit 108 is coupled to sub-units within the A Unit 110 and D Unit 112 via various buses labeled CSR, ACB and RGD.

As illustrated in Figure 3, in the present embodiment the A Unit 110 includes a register file 30, a data address generation sub-unit (DAGEN) 32 and an Arithmetic and Logic Unit (ALU) 34. The A Unit register file 30 includes various registers, among which are 16 bit pointer registers (AR0, ..., AR7) and data registers (DR0, ..., DR3) which may also be used for data flow as well as address generation. Additionally, the register file includes 16 bit circular buffer registers and 7 bit data page registers. The general purpose buses (EB,FB,CB,DB) 130,132,134,136, as well as a coefficient data bus 140 and a coefficient address bus 142 are coupled to the A Unit register file 30. The A Unit register file 30 is coupled to the A Unit DAGEN unit 32 by unidirectional buses 144 and 146 respectively operating in opposite directions. The DAGEN unit 32 includes 16 bit X/Y registers and coefficient and stack pointer registers, for example for controlling and monitoring address generation within the processor 100.

The A Unit 110 also comprises the ALU 34 which includes a shifter function as well as the functions typically associated with an ALU such as addition, subtraction, and AND, OR and XOR logical operators. The ALU 34 is also coupled to the general-purpose buses (EB,DB) 130,136 and an instruction constant data bus (KDB) 140. The A Unit ALU is coupled to the P Unit 108 by a PDA bus for receiving register content from the P Unit 108 register file. The ALU 34 is also coupled to the A Unit register file 30 by buses RGA and RGB for receiving address and data register contents and by a bus RGD for forwarding address and data registers in the register file 30.

In accordance with the illustrated embodiment of the invention, D Unit 112 includes a D Unit register file 36, a D Unit ALU 38, a D Unit shifter 40 and two multiply and accumulate units (MAC1, MAC2) 42 and 44. The D Unit register file 36, D Unit ALU 38 and D Unit shifter 40 are coupled to buses (EB, FB, CB, DB and KDB) 130, 132, 134, 136 and 140, and the MAC units 42 and 44 are coupled to the buses (CB, DB, KDB) 134, 136, 140 and Data Read bus (BB) 144. The D Unit register file 36 includes 40-bit accumulators (AC0, ..., AC3) and a 16-bit transition register. The D Unit 112 can also utilize the 16 bit pointer and data registers in the A Unit 110 as source or destination registers in addition to the 40-bit accumulators. The D Unit register file 36 receives data from the D Unit ALU 38 and MACs 1&2 42, 44 over accumulator write buses (ACW0, ACW1) 146, 148, and from the D Unit shifter 40 over accumulator write bus (ACW1) 148. Data is read from the D Unit register file accumulators to the D Unit ALU 38, D Unit shifter 40 and MACs 1&2 42, 44 over accumulator read buses (ACR0, ACR1) 150, 152. The D Unit ALU 38 and D Unit shifter 40 are also coupled to sub-units of the A Unit 108 via various buses labeled EFC, DRB, DR2 and ACB.

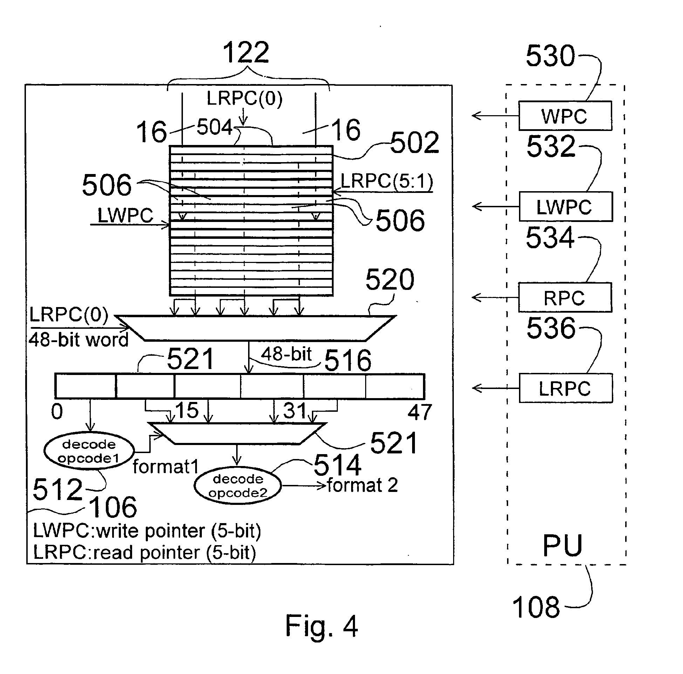

Referring now to Figure 4, there is illustrated an instruction buffer unit 106 in accordance with the present embodiment, comprising a 32 word instruction buffer queue (IBQ) 502. The IBQ 502 comprises 32x16 bit registers 504, logically divided into 8 bit bytes 506. Instructions arrive at the IBQ 502 via the 32-bit program bus (PB) 122. The instructions are fetched in a 32-bit cycle into the location pointed to by the Local Write Program Counter (LWPC) 532. The LWPC 532 is contained in a register located in the P Unit 108. The P Unit 108 also includes the Local Read Program Counter (LRPC) 536 register, and the Write Program Counter (WPC) 530 and Read Program Counter (RPC) 534 registers. LRPC 536 points to the location in the IBQ 502 of the next instruction or instructions to be loaded into the instruction decoder/s 512 and 514. That is to say, the LRPC 534 points to the location in the IBQ 502 of the instruction currently being dispatched to the decoders 512, 514. The WPC points to the address in program memory of the start of the next 4 bytes of instruction code for the pipeline. For each fetch into the IBQ, the next 4 bytes from the program memory are fetched regardless of instruction boundaries. The RPC 534 points to the address in program memory of the instruction currently being dispatched to the decoder/s 512/514.

In this embodiment, the instructions are formed into a 48 bit word and are loaded into the instruction decoders 512, 514 over a 48 bit bus 516 via multiplexers 520 and 521. It will be apparent to a person of ordinary skill in the art that the instructions may be formed into words comprising other than 48-bits, and that the present invention is not to be limited to the specific embodiment described above.

For presently preferred 48-bit word size, bus 516 can load a maximum of 2 instructions, one per decoder, during any one instruction cycle for parallel execution. The combination of instructions may be in any combination of formats, 8, 16, 24, 32, 40 and 48 bits, which will fit across the 48-bit bus. Decoder 1, 512, is loaded in preference to decoder 2, 514, if only one instruction can be loaded during a cycle. The respective instructions are then forwarded on to the respective function units in order to execute them and to access the data for which the instruction or operation is to be performed. Prior to being passed to the instruction decoders, the instructions are aligned on byte boundaries. The alignment is done based on the format derived for the previous instruction during decode thereof. The multiplexing associated with the alignment of instructions with byte boundaries is performed in multiplexors 520 and 521.

Two instructions can be put in parallel if one of the two instructions is provided with a parallel enable bit. The hardware support for such type of parallelism is called the parallel enable mechanism. Likewise, two instructions can be put in parallel if both of the instructions make single data memory accesses (Smem, or dbl(lmem)) in indirect mode. The hardware support for such type of parallelism is called the soft dual mechanism.

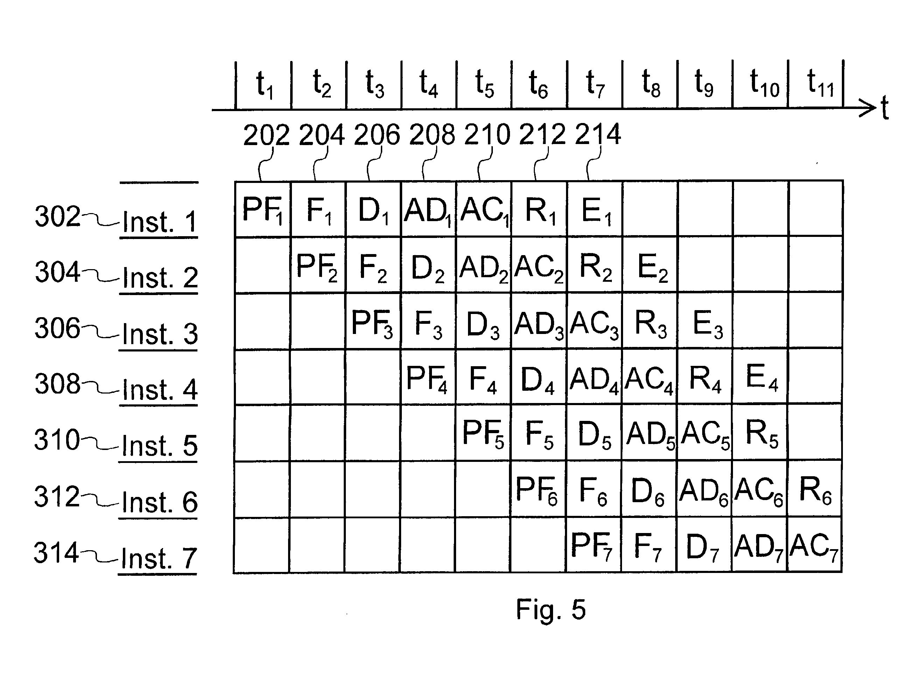

Processor core 102 executes instructions through a 7 stage pipeline, the respective stages of which will now be described with reference to Table 1 and to Figure 5. The processor instructions are executed through a seven stage pipeline regardless of where the execution takes place (A unit or D unit). In order to reduce program code size, a C compiler, dispatches as many instructions as possible for execution in the A unit, so that the D unit can be switched off to conserve power. This requires the A unit to support basic operations performed on memory operands.

**Table 1: Processor pipeline operation for a single cycle instruction with no memory wait states**

| Pipeline stage | | Description. |
|---|---|---|
| P0 | Pre-Fetch | Address program memory via the program address bus PAB. |
| P1 | Fetch | Read program memory through the program bus PB. Fill instruction buffer queue with the 4 bytes fetched in program memory. |
| | | |
| P2 | Decode | Read instruction buffer queue (6 bytes) |
| | | Decode instruction pair or single instruction. |
| | | Dispatch instructions on Program Flow Unit (PU), Address Data Flow |
| | | Unit (AU), and Data Computation Unit (DU). |
| P3 | Address | Data address computation performed in the 3 address generators located in AU : |
| | | - Pre-computation of address to be generated in : |
| | | - direct SP/DP relative addressing mode. |
| | | - indirect addressing mode via pointer registers. |
| | | - Post-computation on pointer registers in : |
| | | - indirect addressing mode via pointer registers. |
| | | Program address computation for PC relative branching instructions: goto, call, switch. |
| P4 | Access | Read memory operand address generation on BAB, CAB, DAB buses. |
| | | |
| | | Read memory operand on CB bus (Ymem operand). |
| P5 | Read | Read memory operand on DB (Smem, Xmem operand), on CB and DB buses (Lmem operand), on BB (coeff operand) |
| | | |
| | | Write memory operand address generation on EAB and FAB buses. |
| P6 | Execute | Execute phase of data processing instructions executed in A unit and D unit. |
| | | Write on FB bus (Ymem operand). |
| | | |
| | | Write Memory operand on EB (Smem, Xmem operand ), on EB and FB buses (Lmem operand). |

The first stage of the pipeline is a PRE-FETCH (P0) stage 202, during which stage a next program memory location is addressed by asserting an address on the address bus (PAB) 118 of a memory interface 104.

In the next stage, FETCH (P1) stage 204, the program memory is read and the I Unit 106 is filled via the PB bus 122 from the memory interface unit 104.

The PRE-FETCH and FETCH stages are separate from the rest of the pipeline stages in that the pipeline can be interrupted during the PRE-FETCH and FETCH stages to break the sequential program flow and point to other instructions in the program memory, for example for a Branch instruction.

The next instruction in the instruction buffer is then dispatched to the decoder/s 512/514 in the third stage, DECODE (P2) 206, where the instruction is decoded and dispatched to the execution unit for executing that instruction, for example to the P Unit 108, the A Unit 110 or the D Unit 112. The decode stage 206 includes decoding at least part of an instruction including a first part indicating the class of the instruction, a second part indicating the format of the instruction and a third part indicating an addressing mode for the instruction.

The next stage is an ADDRESS (P3) stage 208, in which the address of the data to be used in the instruction is computed, or a new program address is computed should the instruction require a program branch or jump. Respective computations take place in A Unit 110 or P Unit 108 respectively.

In an ACCESS (P4) stage 210, the address of a read operand is generated and the memory operand, the address of which has been generated in a DAGEN Y operator with a Ymem indirect addressing mode, is then READ from indirectly addressed Y memory (Ymem).

The next stage of the pipeline is the READ (P5) stage 212 in which a memory operand, the address of which has been generated in a DAGEN X operator with an Xmem indirect addressing mode or in a DAGEN C operator with coefficient address mode, is READ. The address of the memory location to which the result of the instruction is to be written is generated.

Finally, there is an execution EXEC (P6) stage 214 in which the instruction is executed in either the A Unit 110 or the D Unit 112. The result is then stored in a data register or accumulator, or written to memory for Read/Modify/Write instructions. Additionally, shift operations are performed on data in accumulators during the EXEC stage.

Processor 100's pipeline is protected. This significantly improves the C compiler performance since no NOP's instructions have to be inserted to meet latency requirements. It also makes the code translation from a prior generation processor to a latter generation processor much easier.

A pipeline protection basic rule used in processor 100 is as follows: if a write access has been initiated before the on going read access but not yet completed and if both accesses share the same resource then extra cycles are inserted to allow the write completion and execute next instruction with the updated operands; but for emulation, a single step code execution must behave exactly as free running code execution.

The basic principle of operation for a pipeline processor will now be described with reference to Figure 5. As can be seen from Figure 5, for a first instruction 302, the successive pipeline stages take place over time periods T₁-T₇. Each time period is a clock cycle for the processor machine clock. A second instruction 304, can enter the pipeline in period T₂, since the previous instruction has now moved on to the next pipeline stage. For instruction 3, 306, the PRE-FETCH stage 202 occurs in time period T₃. As can be seen from Figure 5 for a seven stage pipeline a total of 7 instructions may be processed simultaneously. For all 7 instructions 302-314, Figure 5 shows them all under process in time period T₇. Such a structure adds a form of parallelism to the processing of instructions.

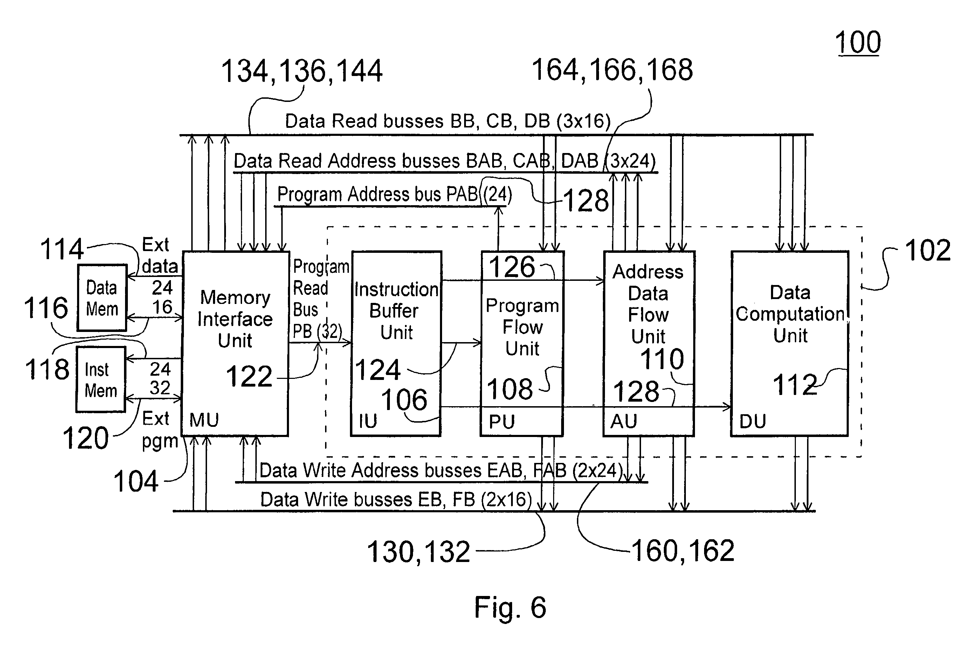

As shown in Figure 6, the present embodiment of the invention includes a memory interface unit 104 which is coupled to external program storage memory 150 via a 24 bit address bus 118 and a 32 bit bi-directional data bus 120. Additionally, the memory interface unit 104 is coupled to data memory units 151 via a 24 bit address bus 114 and a bi-directional 16 bit data bus 116. The memory interface unit 104 is also coupled to the I Unit 106 of the machine processor core 102 via a 32 bit program read bus (PB) 122. The P Unit 108, A Unit 110 and D Unit 112 are coupled to the memory interface unit 104 via data read and data write buses and corresponding address buses. The P Unit 108 is further coupled to a program address bus 128.

More particularly, the P Unit 108 is coupled to the memory interface unit 104 by a 24 bit program address bus 128, the two 16 bit data write buses (EB, FB) 130, 132, and the two 16 bit data read buses (CB, DB) 134, 136. The A Unit 110 is coupled to the memory interface unit 104 via two 24 bit data write address buses (EAB, FAB) 160, 162, the two 16 bit data write buses (EB, FB) 130, 132, the three data read address buses (BAB, CAB, DAB) 164, 166, 168 and the two 16 bit data read buses (CB, DB) 134, 136. The D Unit 112 is coupled to the memory interface unit 104 via the two data write buses (EB, FB) 130, 132 and three data read buses (BB, CB, DB) 144, 134, 136.

Figure 6 represents the passing of instructions from the I Unit 106 to the P Unit 108 at 124, for forwarding branch instructions for example. Additionally, Figure 6 represents the passing of data from the I Unit 106 to the A Unit 110 and the D Unit 112 at 126 and 128 respectively.

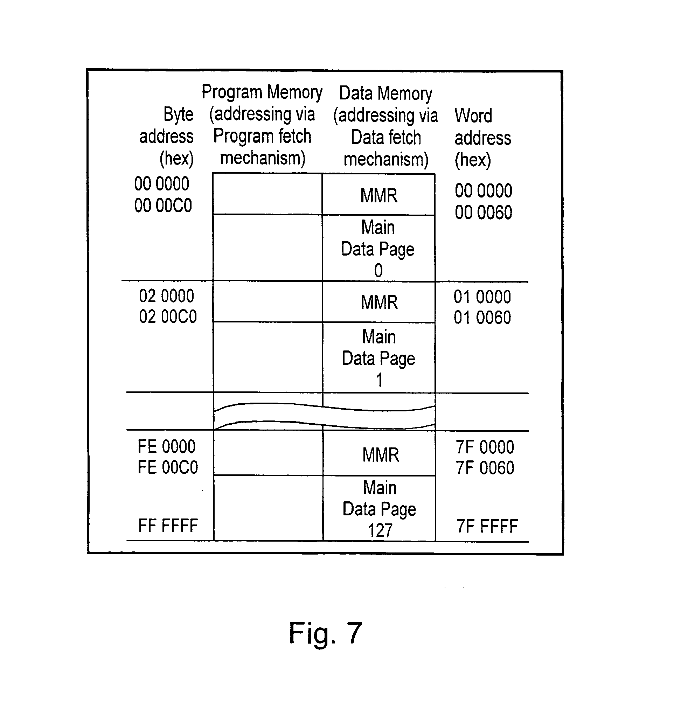

Processor 100 is organized around a unified program/data space, as illustrated in Figure 7. A program pointer is internally 24 bits and has byte addressing capability, but only a 22 bit address is exported to memory since program fetch is always performed on a 32 bit boundary. However, during emulation for software development, for example, the full 24 bit address is provided for hardware breakpoint implementation. Data pointers are 16 bit extended by a 7 bit main data page and have word addressing capability. Software can define up to 3 main data pages, as follows:

| | | | |
|---|---|---|---|
| MDP | Direct access | Indirect access | CDP |
| MDP05 | - | Indirect access | AR[0-5] |
| MDP67 | - | Indirect access | AR[6-7] |

A stack is maintained and always resides on main data page 0. CPU memory mapped registers are visible from all the pages.

Various aspects of processor 100 are summarized in Table 2.

**Table 2-Summary of Improved Processor 100**

| | |
|---|---|
| Very Low Power programmable processor | |
| Parallel execution of instructions, 8-bit to 48-bit instruction format | |
| Seven stage pipeline (including pre-fetch) | |
| - Instruction buffer unit highlight | 32x16 buffer size Parallel Instruction dispatching Local Loop |
| Data computation unit highlight | Four 40 bit generic (accumulator) registers Single cycle 17x17 Multiplication-Accumulation (MAC) 40 bit ALU, "32 + 8" or "(2 x 16) + 8 " Special processing hardware for Viterbi functions Barrel shifter |
| Program flow unit highlight | 32 bits/cycle program fetch bandwidth 24 bit program address Hardware loop controllers (zero overhead loops) Interruptible repeat loop function Bit field test for conditional jump Reduced overhead for program flow control |
| Data flow unit highlight | Three address generators, with new addressing modes Three 7 bit main data page registers Two Index registers Eight 16 bit pointers Dedicated 16 bit coefficients pointer Four 16 bit generic registers Three independent circular buffers Pointers & registers swap 16 bits ALU with shift |
| Memory Interface highlight | Three 16 bit operands per cycle 32 bit program fetch per cycle Easy interface with cache memories |
| C compiler | |
| Algebraic assembler | |

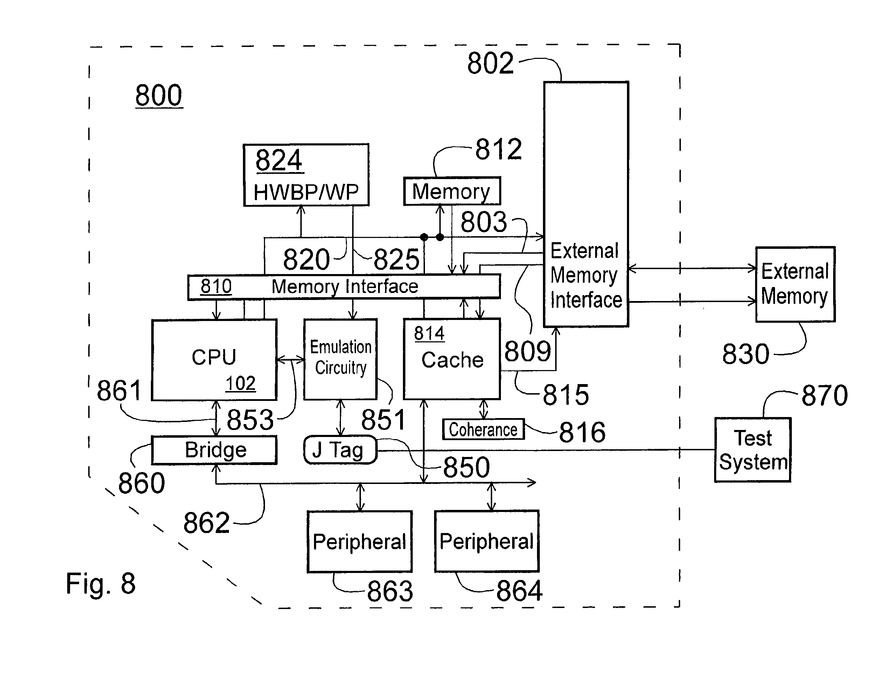

Figure 8 is a block diagram illustrating a digital system with the processor 100 and associated with benchmarking circuitry 852, according to aspects of the present invention. In this embodiment, several individual ASIC component cells are combined to form megacell 800 on a single integrated circuit. Processor core 102 is connected to memory interface 810. Instructions and data can be obtained from cache 814, internal memory 812, or external memory 830 via the external memory interface 802. Program fetch address bus 820 provides program counter addresses to cache 814 or memories 812, 830 in response to RPC 534 (see Figure 5). The cache requests a program fetch from external memory 830 via bus 815 when a cache miss occurs. In this case, instruction data is provided to processor core 102 via bus 808 while the cache is updated via bus 809. Hardware breakpoint/window point circuitry 824 monitors address bus 820 and sends a window signal 825 to benchmark circuitry 852 when a pre-selected address or address range is detected. Emulation circuitry 851 provides access to the various components within megacell 800 via JTAG test port 850. Memory read and write requests can be conducted by the emulation circuitry across emulation bus 853 by sending a request to processor core 102. According to an aspect of the present invention, cache coherence circuitry 816 monitors read and write transactions initiated by the emulation circuitry and maintains coherency of the cache.

An external host 870 test system is connected to test port 850 to control emulation and testing. External test system 870 is representative of a variety of known test systems for debugging and emulating integrated circuits which can be configured to take advantage of the present invenition. One such system is described in U.S. Patent 5,535,331.

JTAG interface 850 is an improvement on the structure of the IEEE 1149.1 - 1990 "Standard Test Access Port and Boundary Scan Architecture. Terms and concepts relating to IEEE 1149.1 which are used herein are explained fully in this IEEE standard.

The IEEE 1149.1 standard provides a communication protocol that allows the selection of one or more devices imbedded within a system. This protocol implements the primitives to control on-chip-debug and test facilities. JTAG Debug interface 850 of embodiments of the present invention adds two additional terminals (nET1 and nET0) to the five terminal version of the standard IEEE interface (nTRST, TCK, TMS, TDI, and TDO). Including nTRST in the debug interface definition simplifies system design as this terminal, when held LOW, generates an asynchronous reset to the test and debug logic of each device within the system. This guarantees normal system operation. This also eliminates the need for the system to provide a continuously running TCK.

Emulation circuitry 851 contains hardware extensions to the standard IEEE interface, providing more advanced debugging and production test features. Although the IEEE standard targets testing board or system level interconnect, extensions to its functionality can do much more. Four significant extensions add to the baseline IEEE function, as follows: debug facilities, multiple scan technologies, trigger channels through two additional terminals, and extended operating modes (EOMs). The following paragraphs briefly describe each of these four extensions.

Debug Facilities: Development tools use the debug interface to control the execution flow of an application program and to view or modify CPU registers, peripheral registers, and system memory. Built in debug facilities provide both stop mode and real-time debug environments. Specialized hardware, managed with IEEE interface primitives, provides the execution control for both of these debug modes. Stop-mode debug facilities can halt program execution after any instruction at any point in the program. This provides precise control of all program execution and minimizes the development tool's use of system resources. Real-time debug facilities insulate time critical (interrupt driven) portions from debug activity. These portions of the application continually execute while the remaining portion (less time critical) of the application are debugged in a conventional fashion. Both real-time and stop-mode debug allow program execution to be halted for the following reasons: after single instruction is executed; prior to the execution of instructions identified as breakpoints; after a specific data access (read or write), or; by an asynchronous external request.

Access to Alternate Scan Technologies: Various system designs may contain multiple scan technologies, such as IEEE and proprietary scan architectures, as they offer different technical advantages. Standard IEEE instruction scan, data scan and run test more than one technology. Hardware is added to the device to provide a bridge between IEEE and other scan technologies.

Visibility and Triggering: The IEEE standard does not support the parallel observation of internal chip activity or parallel stimulation of chip activity required for some test and emulation functionality. The addition of two additional terminals (nET1 and nET0) to the debug interface address this deficiency. These terminals provide a way to export internal device events and import external debug or test events.

Extended Operating Modes: Production test, yield analysis, characterization of device components and target system hardware and software debug require the implementation of various device operating modes. Test mode selection involves one of two methods, indirect (scan sequences) and direct (parallel device terminal transitions). Memory test modes generally use direct selection methods. These tests provide direct access to a memory array or memory and may use memory testers that do not support scan. CPU core tests use indirect methods. Testers use scan to load CPU core tests and specify test modes needed to run them. Testing multiple scannable Mega-modules on a device, i.e., two processors, requires the selection and test of one Mega-module at a time. This requirement arises from the need to use an unmodified set of module test patterns in all module test environments.

An external test host system, such as an XDS-524 emulation system (available from Texas Instruments, Inc) can be connected to 7 pin JTAG interface 850 for controlling emulation control 851.

Still referring to Figure 8, bridge 860 connects to data bus 861 and provides a buffered data bus, RBus 862. Peripherals 863 and 844 are representative of a variety of peripheral devices that may be connected to Rbus 862. Rbus 862 also connects to emulation circuitry 851 and to cache circuitry 814 in order to provide memory mapped access to non-CPU registers therein.

Table 3 lists memory mapped registers within processor core 102 that are relevant to an understanding of this embodiment of the present invention. These registers will be described in more detail in the following paragraphs. Processor core 102 also has a number of other memory mapped registers that are used for various control, status, and operational tasks. Table 4 describes bits within status / control register ST1 that are relevant to an understanding of the present invention, while Table 5 summarizes the bit assignments of status/control register ST3.

**Table 3: Memory Mapped CPU Registers**

| MMR Register | Word Address (Hex) | Register Description | Bit Field |
|---|---|---|---|
| ST1 | 07 | System control register | [15-00] |
| ST3 | 37 | System control register | [15-00] |

**Table 4 - Status /Control Register ST1**

| | |
|---|---|
| ABORTI | bit 13: Emulation control ABORTI = 1 Indicates that an interrupt service routine (ISR) is not be returned from. This signal is exported to an emulation support module. This clears the IDS (interrupt during debug) and HPI (high priority interrupt) bits in the debug status register and resets the Debug Frame Counter. This causes the emulation software to disregard any and all outstanding debug states entered from high priority interrupts since the processor was stopped by an emulation event. ABORTI = 0 Default operating mode ABORTI is cleared at reset. |
| EALLOW | bit 14: Emulation access enable bit EALLOW = 1 Non CPU emulation registers write access enabled. EALLOW = 0 Non CPU emulation registers write access disabled EALLOW bit is cleared at reset. The current state of EALLOW is automatically saved during an interrupt / trap operation. The EALLOW bit is automatically cleared by the interrupt or trap. At the very start of an interrupt service routine (ISR), access to the non-CPU emulation registers is disabled. The user can re-enable access using the instruction : bit(ST1,EALLOW) = #1. The [d]return_int instruction restores the previous state of the EALLOW bit saved on the stack. The emulation module can override the EALLOW bit (clear only). The clear from The emulation module can occur on any pipeline slot. In case of conflict the emulator access get the highest priority. The CPU has the visibility on emulator override from EALLOW bit read. |
| DBGM | bit 15: Debug enable mask bit DBGM = 1 Blocks debug events from time critical portions of the code execution. Debug access is disabled. DBGM = 0 Debug access is enabled. The current state of DBGM is automatically saved during an interrupt/trap operation. The DBGM bit is automatically set by the interrupt or trap. At the very start of an interrupt service routine (ISR), the debug events are blocked. The user can re-enable debug access using the instruction : bit(ST1,DBGM) = #0. The [d]return_int instruction restores the previous state of the DBGM bit saved on the stack. The pipeline protection scheme requires that DBGM can be set/clear only by the dedicated instruction bit(STl,k4) = #1, bit(ST1,k4) = #0, ST1 access as memory mapped register or bit(Smem,k4) = #0, bit(Smem,k4) = #1, cbit(Smem,k4) have no effect on DBGM status bit. Emulation has R/W access to DBGM through DT-DMA. DBGM is set at reset. DBGM is ignored in STOP mode emulation from software policy. estop_0() and estop_1() instructions will cause the device to halt regardless of DBGM state. |

**Table 5 - Status/Control Register ST3**

| | |
|---|---|
| HOMP | Bit 0: Host only access mode to Peripherals |
| HOMR | Bit 1: Shared access mode to HPI RAM 802 |
| HOMX | Bit 2: Host only access mode: |
| HOMY | Bit 3: Host only access mode: This bit operates the same as HOMX. |
| HINT | Bit 4: Host interrupt |
| XF | Bit 5: External Flag: |
| CBERR | Bit 6: CPU bus error: |
| MP/NMC | Bit 11: Microprocessor / microcomputer mode: |
| AVIS | Bit 12: Address visibility mode |
| CACLR | Bit 13: Cache clear |
| | CACLR = 1 All the Cache blocks are invalid. The amount of cycles required to clear the Cache is dependent on the memory architecture. When the Cache is flushed the contents of the prefetch queue in the instructions buffer unit is automatically flushed. |
| | CACLR = 0 The CACLR bit is cleared by the Cache hardware upon completion of Cache clear process. The software can pull the CACLR flag to check Cache clear procedure completion. |
| | If an interrupt is taken within the Cache clear sequence, it's latency and duration will be affected due to execution from external memory. It is recommended to install critical ISR's on internal RAM. |
| | CACLR is cleared at reset. |
| CAEN | Bit 14: Cache enable |
| CAEN = 1 | Program fetches will either occur from the Cache, from the internal memory or from the direct path to external memory, via the MMI depending on the program address decode. |
| CAEN = 0 | The Cache controller will never receive a program request, hence all program requests will be handled either by the internal memory or the external memory via the MMI depending on address decode. |
| CAFRZ | Bit 15: Cache freeze |
| | CAFRZ = 1 The Cache freeze provides a mechanism whereby the Cache can be locked, so that it's contents are not updated on a cache miss, but it's contents are still available for Cache hits. This means that a block within a frozen Cache is never chosen as a victim of the replacement algorithm. It's contents remain undisturbed until the CAFRZ bit is cleared |
| | CAFRZ = 0 Cache default operating mode. |
| | CAFRZ is cleared at reset. |
| ST3[10:7] | Unused status register bits |

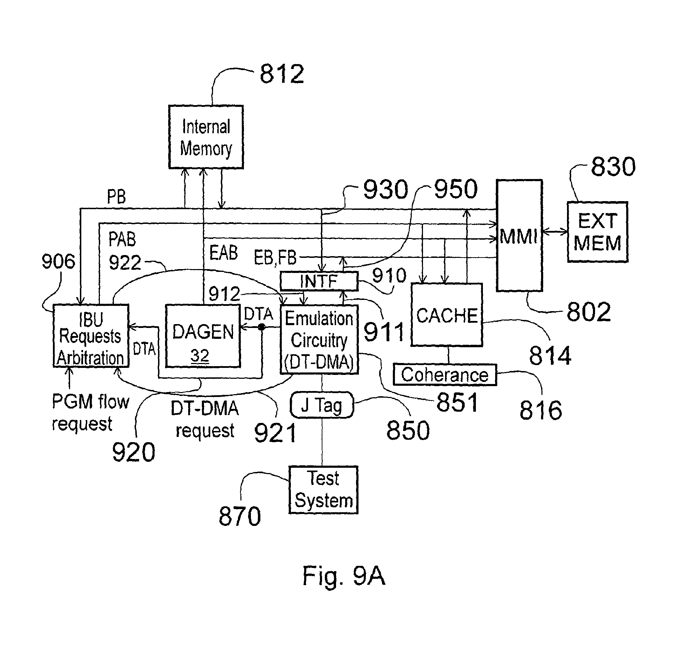

Figure 9A is a block diagram illustrating emulation circuitry of Figure 8 in more detail. Emulation circuitry 851 provides common debug accesses (read and writing of memory and registers) without direct CPU intervention through a Debug and Test Direct Memory Access (DT-DMA) mechanism. Since these accesses intrude on CPU time, they can be optionally blocked by disabling the debug mode (DBGM) by setting a bit in status / control register 1 (ST1). This can be overridden using debugger software. Under normal debugger operation, the DT-DMA accesses use very minimal CPU time. For example, consider that a debugger screen contains 1,000 memory words to access and the screen is updated 10 times per second. The debugger will perform 10,000 DT-DMA accesses per second. Assume that each DT-DMA access takes one cycle of CPU time (this is a very simplistic estimate), and the CPU is running at a 100 MIP (10 ns per cycle). The debug overhead will be 0.01% (if a DT-DMA access takes multiple cycles, then multiply that number by 0.01% to get the overhead rate). Note that the information shown on the debugger screen is gathered at different times from the target, so it does not represent a snapshot of the target state, but rather a composite. It also takes the host time to process and display the data, so the display does not correspond to the current target state, but rather to the target state as of a few milliseconds ago.

Access to memory-mapped peripheral registers by a test host is also done through the DT-DMA mechanism. Because the DT-DMA mechanism uses the same memory access mechanism as the CPU, any read or write access that the CPU can perform in a single operation can be done via a DT-DMA memory access. The DT-DMA mechanism will present an address via address bus 920 (and data via interface 910, in the case of a write) to the CPU, which will perform the operation during an open bus cycle slot. DT-DMA request signal 921 is asserted by the emulation circuitry to request a read or write transaction. Once the CPU has obtained the desired data, it is presented back to the DT-DMA mechanism. DT-DMA ready signal 922 is asserted by IBU 106 to indicate that a requested data item is available to the emulation circuitry. Bus 920 and interface 910 collectively are included in bus 853 of Figure 8.

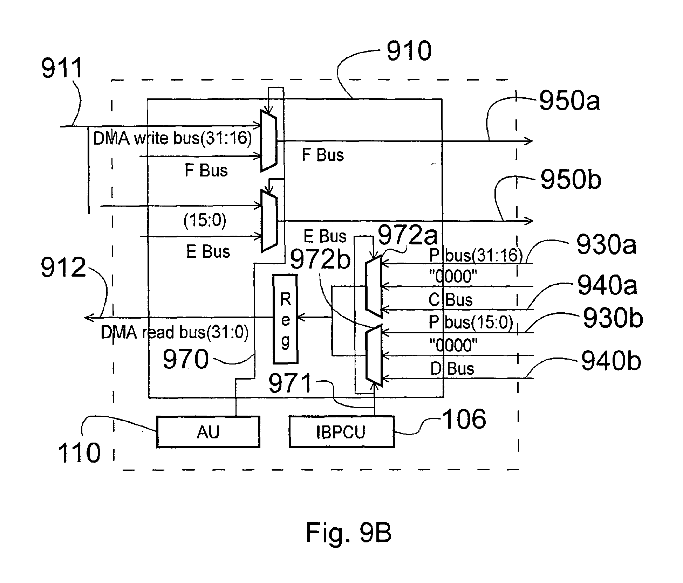

Figure 9B is a block diagram illustrating emulation interface circuitry 910 of Figure 9A in more detail. DT-DMA write bus 911 provides data to be written from the emulation logic to the main write buses of processor 100, Ebus 950a and Fbus 950b. DT-DMA read bus 912 receives either a requested instruction or data and sends it to the emulation circuitry. For instruction read requests, IBU 106 schedules a read request in response to a request 921 from the emulation circuitry and a DT-DMA address is placed on program address bus PAB. The requested instruction is then taken from program bus 930 in response to selection signal 971 from the instruction buffer unit 106 and sent to the emulation circuitry on read bus 912.

For a data write, DAGEN 32 schedules a write request in response to a request 921 from the emulation circuitry and a DT-DMA address is placed on the address bus EAB. Write data is simultaneously placed on the Ebus 950a and the Fbus 950b in response to control signal 970 from the AU. According to an aspect of the present invention, a tag signal on address bus EAB is also asserted by DAGEN 32 in response to the DT-DMA request so that the write transaction can be identified as such by instruction cache 814, which monitors the write address bus EAB.

DT-DMA data reads are handled in a similar manner, using read buses CB 930a and DB 930b. Select signals 971 control multiplexers 972a and 972b to select either an instruction from the program bus PB, data from the read buses CB, DB, or a fixed data value of "0."

The DT-DMA mechanism can operate in either a preemptive or non-preemptive mode. In non preemptive mode, the DT-DMA mechanism waits for the desired memory bus(ses) to be unused for a cycle (referred to as a hole), at which point the DT-DMA mechanism uses it to perform the read or write operation. These memory holes will occur naturally while the CPU is running (e.g while waiting on newly fetched data or during a pipeline protection cycle). A program memory hole will occur when the fetch queue is full, typically due to several consecutive instructions with no branches. In preemptive mode, a NULL is jammed into the decade stage of the pipeline, essentially creating a hole. Non-preemptive accesses to zero-wait state memory take no cycles away from the CPU. If wait-stated memory is accessed, then the pipeline will stall during each wait-state, just as a normal memory access would cause a stall CPU registers must always be accessed preemptively. Also, it is possible for the debug software to jam certain instructions into the pipeline using the DT-DMA mechanism. This must be done preemptively.

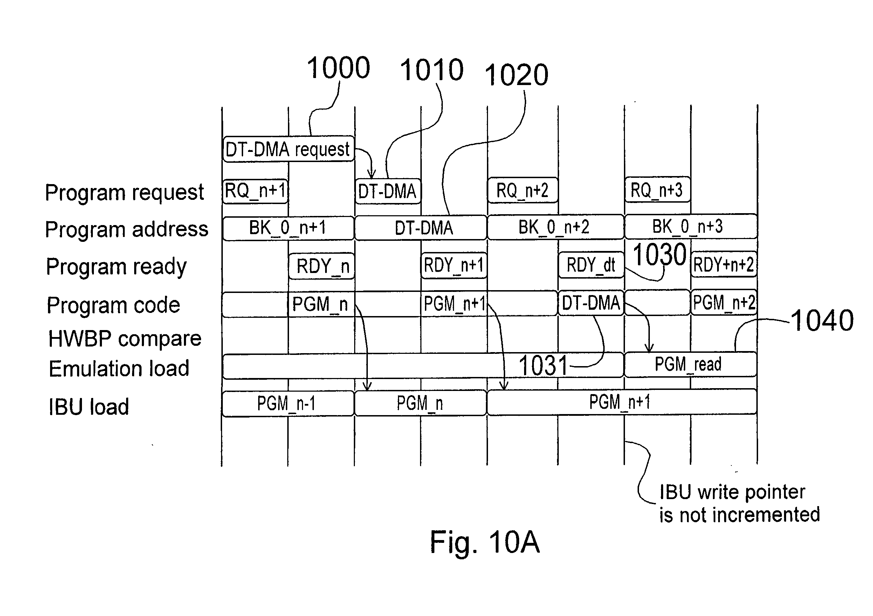

Figure 10A is a timing diagram illustrating a DT-DMA read request by the emulation circuitry of Figure 8. DT-DMA request signal 921 is asserted as shown at time 1000. A request is scheduled in IBU 106 at time 1010 and a DT-DMA address is placed on program address bus PAB at time 1020. DT-DMA ready signal 922 is asserted at time 1030 indicating that a requested instruction 1031 is on program bus PB. The requested instruction is transferred to the emulation circuitry on read bus 912 at time 1040.

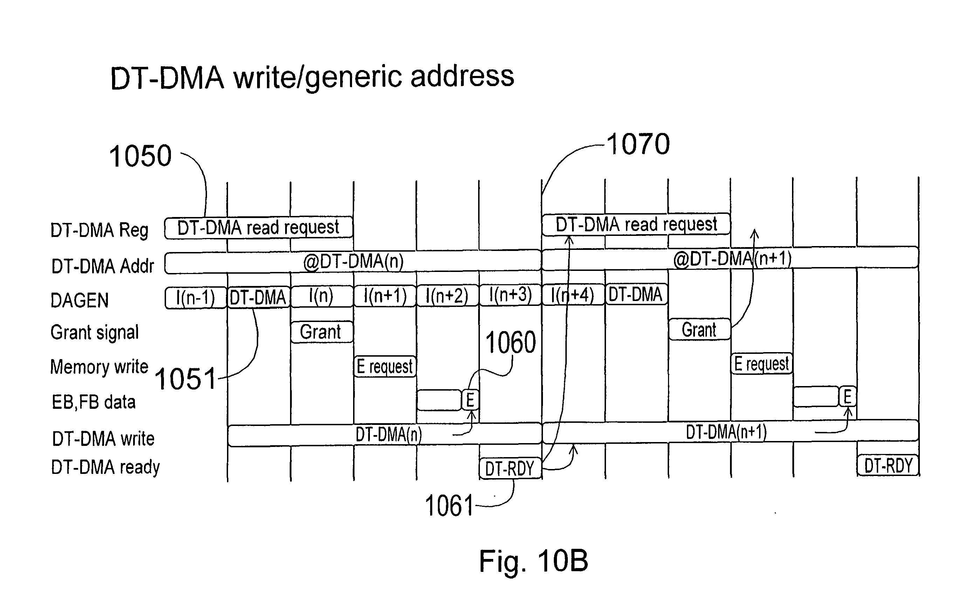

Figure 10B is a timing diagram illustrating a DT-DMA write request by the emulation circuitry of Figure 8. A DT-DMA request 921 is made at time 1050. The DT-DMA request is scheduled in the DAGEN pipeline at time 1051. At time 1060, the DT-DMA write data is placed on the write buses EB and FB along with a DT-DMA write address on write address bus EAB. According to an aspect of the present invention, a DT-DMA tag signal is also asserted at this time on write address bus EAB so that the instruction cache can maintain coherency, as will be explained in more detail later. Coherence circuitry 816 monitors address bus EAB and causes cache 814 to invalidate a cache entry, if the address of a cache entry matches the DT-DMA write address. At time 1061, DT ready signal 922 is asserted to conclude the DT-DMA transaction.

In this embodiment, there are two forms of control over the processor's execution of code: stop-mode halts execution of all code whereas real-time mode allows selected interrupt service routines (ISRs) to be performed while execution of background code is halted. Background code refers to the main body of code which is generally not as time-critical as the interrupt routines which service motor controls or high-speed timers. Real-time provides for the debug of code that interacts with interrupts that cannot be disabled. Stop-mode provides complete control of program execution, allowing for the disabling of all interrupts (including those which are non-maskable) and reset. Both execution modes can suspend program execution at break events, such as software breakpoint instructions or specified program or data accesses (i.e. analysis breakpoints or watchpoints) when the host or external hardware (XDS-524) requests it.

Real-time debug allows for the suspension of background program execution at break events while continuing to service time-critical interrupts (also referred to as foreground code). Program execution can actually be suspended in multiple locations - under certain circumstances it is desired to break within one time critical interrupt while still allowing others to be serviced. The suspension of execution is similar to the execution of an IDLE instruction. The pipeline flushes as instruction decode stops and all current pipeline activity completes. Interrupts can restart execution, but after the interrupt service routine is complete, the device returns to the suspended state (this differs from IDLE - after servicing an interrupt the device does not typically return to the IDLE state). When suspended, the debug interrupt enable register (DBIMR) is used in addition to the standard interrupt enable register (IMR) to qualify pending interrupts. Interrupts must be enabled by both masks to interrupt the CPU when it is suspended, however, the global interrupt enable (INTM) is ignored. Suspending execution will add only one cycle to interrupt latency.

The DBIMR register serves to indicate what interrupts are time-critical. A debug status register DBGSTAT is physically implemented within the emulation circuitry in parallel with the status register ST1. This includes the DBGM, EALLOW and INTM bits. When a time-critical hardware interrupt is taken, the high priority interrupt active bit (HPI) in DBGSTAT is enabled (it's previous value is saved on the stack). HPI will be cleared when the last time-critical interrupt service routine completes and its previous DBGSTAT is popped off the stack. HPI is used to indicate whether certain break events should be performed. Note that HPI will be set whenever an interrupt enabled in the DBIMR register is taken - not just when execution was suspended. An INTR or TRAP instruction, with a corresponding bit set in DBIMR, will not set the HPI bit.

Stop-mode causes break events to suspend program execution at the next interrupt boundary (which is generally identical to the next instruction boundary). When execution is suspended, all interrupts (including reset and LEAD3 Emulation Functionality non-maskable interrupts) are ignored until the CPU receives a debug run directive. Stop-mode can be thought of as similar to real-time mode, except that no interrupts are considered time-critical (i.e. all code is background code). Should an interrupt occur simultaneously with a debug event, the debug event has priority. However, once the processing of an interrupt has begun, the CPU can not process a debug event until the first instruction boundary following one of these events.

Cache coherency circuitry 816 will now be described in more detail. In order to make emulation and the debugger independent of cache organization, a hardware cache coherence mechanism is provided, according to an aspect of the present invention. Emulation writes to program memory (e.g. for the purpose of software breakpoint (SWBP) instruction replacement - program memory write) triggers a cache invalidate cycle. The purpose of this is to maintain cache coherence with program memory at all times. If the specified emulation program access matches an address in the cache tag, the matching cache line is invalidated. The next pipeline (not emulation) fetch of this instruction will generate a cache miss cycle, refreshing the cache from program memory. Emulation reads of program memory returns cache values, if the corresponding address matches a cache entry, and the cache is enabled. In the event an emulation program memory read address is not contained within the cache or the cache is disabled, the addressed location is supplied from main memory. Emulation program memory reads do not cause a cache replacement cycle to occur. Emulation program memory writes ignore the user settings of the cache enable and freeze bits in ST3. In the event that the cache is disabled or frozen, the instruction cache is invalidated on an emulation program write that matches a valid tag in the cache. Emulation program memory writes will always operate within the following constraints: an 8 bit write will be any byte address, a 16 bit write will be on an even byte address, and a 32 bit write will be on a 4 byte even address boundary. This insures that an emulation program memory write will not cross a cache line in a single write operation. Note that it is not sufficient just to maintain cache coherence, the instruction buffer must maintain coherence as well.

When emulation circuitry 851 performs a DT-DMA access type of 'Program Access' a write indication via a tag signal associated with address bus EAB is provided to enable the cache to snoop the EAB bus for a possible cache tag match. On a DT-DMA program read access, the cache supplies the requested fetch data addressed by PAB as in a normal CPU access (if a cache hit). A replacement cycle does not occur if the fetch was a cache miss. Emulation program memory reads will always be done as 32 bit 'long' accesses aligned to a 4 byte boundary

Emulation program memory writes are done using 8/16/32 bit accesses with the address alignment restrictions noted in the previous section. All other emulation accesses to memory use one of the data or I/O access types to read or modify memory. These accesses have no effect on the cache.

The cache invalidate cycle is coordinated with an instruction buffer (IB) flush operation. If a simultaneous IB flush and cache invalidate occur, the IB does not begin it's refill operation until the cache invalidate has completed. This avoids the IB refetching possibly stale program memory values. This situation is avoided by the cache invalidating on emulation program memory writes, and the IB flushing on pipeline execution resumption (under all circumstances, e.g. debug interrupt, step command from debugger).

Referring again to Figure 8, cache 814 will now be described in more detail. For the purpose of this specification, the following definitions will be used:
- Cache word - the processor defines a word as a 16 bit entity.
- Cache Line - The Cache memory is organised as 32 bits wide. Hence one of these 32 bit entities contains two words, and is referred to as a Cache line.
- Cache Block - A Cache block is the 4 * 32 bit area of memory (i.e. 4 lines) that has one tag and 4 validity bits (one validity bit per Cache line) associated with it.

The high performance required by a DSP processor requires a highly optimised data and program flow for high data and instruction throughput. The foundation of this is the memory hierarchy. To reap the full potential of the DSP's processing units, the memory hierarchy must read and write data, and read instructions fast enough to keep the relevant CPU units busy.

To satisfy the application requirements, the DSP processor memory hierarchy must satisfy the conflicting goals of low cost, adaptability and high performance. One of the key features of the processor is that it can be interfaced with slow program memory, such as external memory 830, which can be Flash memory, for example. However, DSP execution requires a high bandwidth for instruction fetching. It is possible to execute DSP code from internal memory 812, but this requires the downloading of the full software prior to it's execution. Thus, a Cache memory, which is an auxiliary fast memory between the processor and it's main memory, where a copy of the most recently used instructions (and/or data) are written to be (re)accessed faster, sitting on the DSP program bus is the best trade-off for speed of program access and re-fill management.

A Cache will improve the overall performance of a system because of the program locality or locality of reference principle. No Cache will work if the program accesses memory in a completely random fashion. To evaluate the architecture of a Cache, it is necessary to do statistical optimisations. A Cache architecture may be very good for a given program, but very bad for a different program. Hence it is very important to perform simulations and measure the performance on the actual prototypes.

Caches generally give very efficient typical memory accesses times, but they do increase the maximum memory access time. This may be a problem in real-time operations. Therefore it may be important to optimise the number of lost clock periods on miss memory accesses. The performance of a general Cache architecture is determined by the following:
- Cache Memory Speed
- Main Memory Speed
- Cache Size
- Cache Block Size
- Cache Organisation
- Cache Replacement Algorithm
- Cache Fetch Policy
- Cache Read Policy
- Cache Write Policy
- Cache Coherence Policy

Cache 814 of the present embodiment is a "read only" instruction Cache; therefore, the latter two points can be ignored. However, other embodiments may have other types of caches.

Several analyses performed on pieces of DSP software for wireless telephone applications showed that a relatively small Cache size combined with a simple architecture is efficient. Thus, the following features have been defined for the present embodiment:
Cache size : 2K words of 16 bits.
8 words per block (8 x 16 bits).
4 validity bits per block (one per Cache line).
Cache type : Direct-mapped.
Look-through read policy.

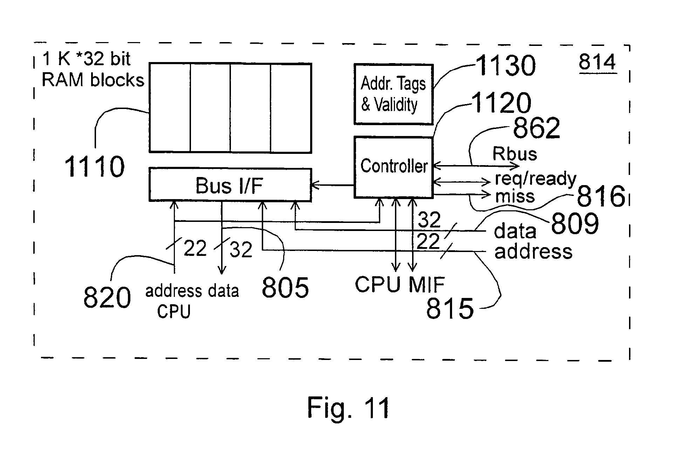

Figure 11 is a block diagram of the Cache. Cache 814 consist of Memory Core 1110 and Controller 1120. As the program space is addressable as 4 bytes (2 words) aligned to the 4 byte boundary in the processor, and as 4 bytes (2 words) are fetched per cycle, the program memory core can be organised in banks of 32-bit words for all read and write accesses.

The Cache detects if any requests for an instruction from the CPU can be served by the Cache or if a new block of instructions needs to be filled from external memory. In order to do this, the Cache Controller manages buffer memory 1130 of address tags associated with flags to indicate that the Cache content is valid or not.

As described earlier, the processor has a six stage pipeline with the first four stages, pre-fetch, fetch, decode and address stages, relevant to the Cache design. For a Pre-fetch cycle the IBU generates an address and a Request signal. The address is decoded in the MIF block and the relevant module requests are derived and sent to their respective modules. When the Cache receives a request from the MIF block it latches the address (value of the Program Counter) generated by the CPU. It then uses the lsbs of the address as an address to its Data RAM and its Address RAM (containing the Tag value and the Validity bits) in parallel. If the msbs of the address received from the CPU matches those read from the relevant location in the Address RAM and the validity bit is set, then a hit is signified to the Processor by the return of an ready signal in the fetch cycle along with the appropriate data read from the Data RAM.

If the msbs of the address received from the IBU do not match those read from the relevant location in the Address RAM or the validity bit is not set, then a miss is signified to the Processor by keeping the ready inactive in the fetch-cycle and an external request and the requested address are sent to the MMI interface for reading external program memory. According to an aspect of the present invention, miss signal 816 is also asserted and sent to benchmark circuitry 851 so that a miss event can be counted as a benchmark event.

When the MMI returns and ready along with the data requested, the data can be latched into the Cache Data memory and the msbs of the requested address latched into the Address memory along with setting of the relevant validity bit in the same memory area. In the same cycle the data can also be sent back to the CPU along with an ready.

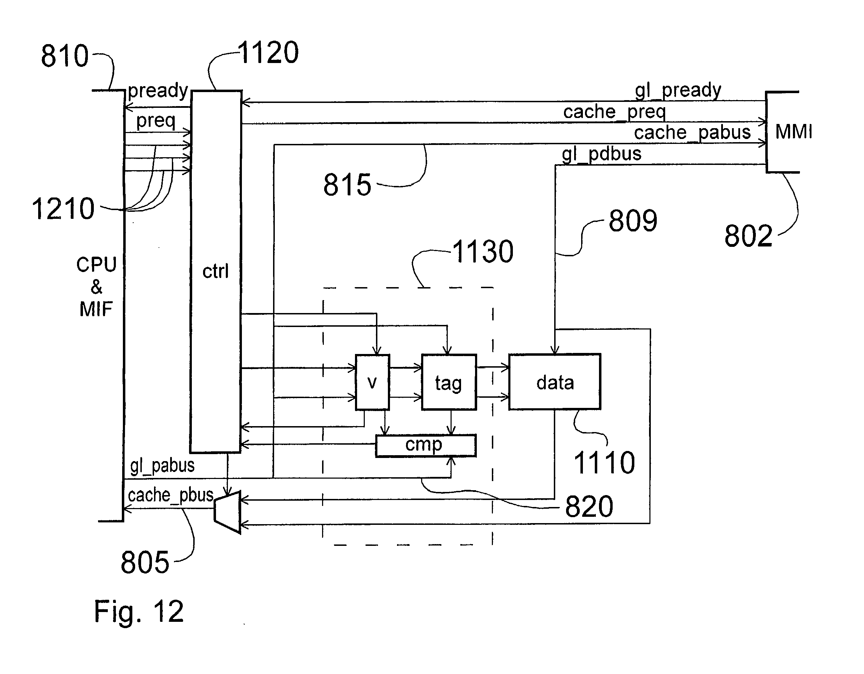

Figure 12 shows a more detailed block diagram for a direct-mapped Cache using a word by word fetch policy to highlight the instruction flow through the Cache, but not showing the test and control interface port.

As stated at the start of the previous section, there are several factors in the Cache architecture that determine the performance of the Cache. They will be examined in more depth in this section. The main problem to be addressed is system performance, the instruction flow to the processor must be maintained at a high level, whenever possible, allowing it to run freely as often as possible (i.e. with a minimum of stalls). This means the fetching of redundant data into the Cache should be minimised and the penalty for external fetches should also kept to a minimum.

The cost of FLASH memory for external memory 830, for example, is sufficiently high at present to justify that code size is one of the most important criteria when choosing a DSP processor for uses such as cellular telephones. Hence the processor is optimised for code size and many architectural decisions have been made so that the code size for a typical application was smaller than an industry standard processor. To this end variable length instructions are used and the code is compacted, so that there is no alignment of instructions. This non-alignment also applies to calls and branches, where the code is not aligned to any boundary, whereas a x86 processor aligns calls/branch code to Cache block boundaries. This means that whenever a call / branch occurs the processor may access code from the middle of a Cache block. These conditions mainly affect the fetch policy of the Cache.

The 2K word size of the Cache was set because analysis of DSP code from typical cellular phone applications indicated that most code routines would fit within 1k words of program memory.

For control code we can expect a branch every 4 instructions (a typical industry figure) and for DSP algorithm code we can expect a call or branch every 8 cycles (Note: this is for code generated by a 'C' compiler - for hand assembled code, branches / calls will appear less often). Hence from this and from some initial analysis, the size of a block in the Cache was set to 8 Cache words (16 bytes). This is a compromise figure between access to external memory such as FLASH, arbitration for access to such devices at the external interface and the desire to reduce the number of redundant fetches of instructions that will not be used, due to calls and branches within the code.

The Cache is designed to be transparent to the user. Therefore to locate an item in the Cache, it is necessary to have some function which maps the main memory address into a Cache location. For uniformity of reference, both Cache and main memory are divided into equal-sized units, called blocks. The placement policy determines the mapping function from the main memory address to the Cache location.

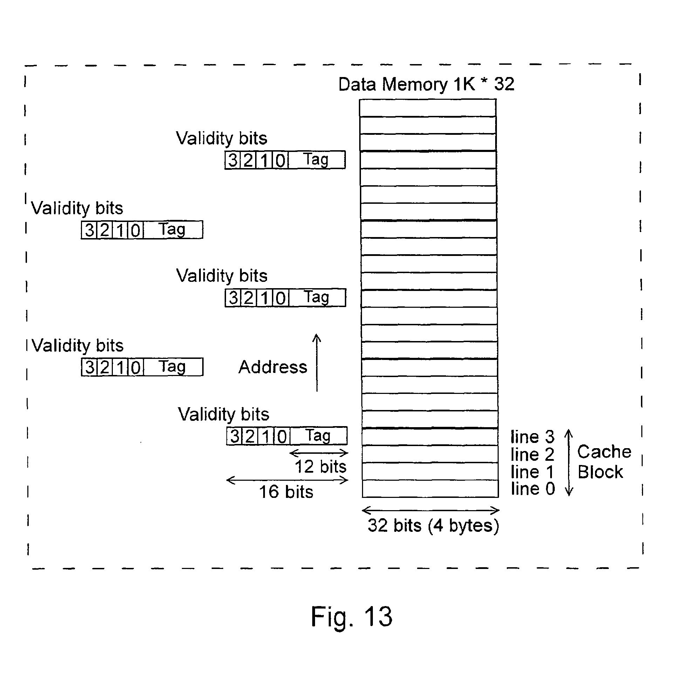

Figure 13 is a diagram illustrating Cache Memory Structure shows the memory structure for a direct mapped memory. Each Cache line consists of 4 bytes (32 bits). Each Cache block contains four lines (16 bytes, 8 words). Each line within a block has it's own validity bit, hence four validity bits per block, and each block has a tag (consisting of the msbs of the address field).

Cache 814 uses direct mapping, which is the simplest of all Cache organisations. In this scheme, block i (block-address) of the main memory maps into the block i modulo 256 (the number of blocks in the Cache) of the Cache. The memory address consists of four fields: the tag, block, word and byte field. Each block has a specific tag associated with it. When a block of memory exists in a Cache block, the tag associated with that block contains the high-order 12 bits of the main memory address of that block. When a physical memory address is generated for a memory reference the 8-bit block address field is used to address the corresponding Cache block. The 12-bit tag address filed is compared with the tag in the Cache block. If there is a match, the instruction in the Cache block is accessed by using the 2-bit word address field.

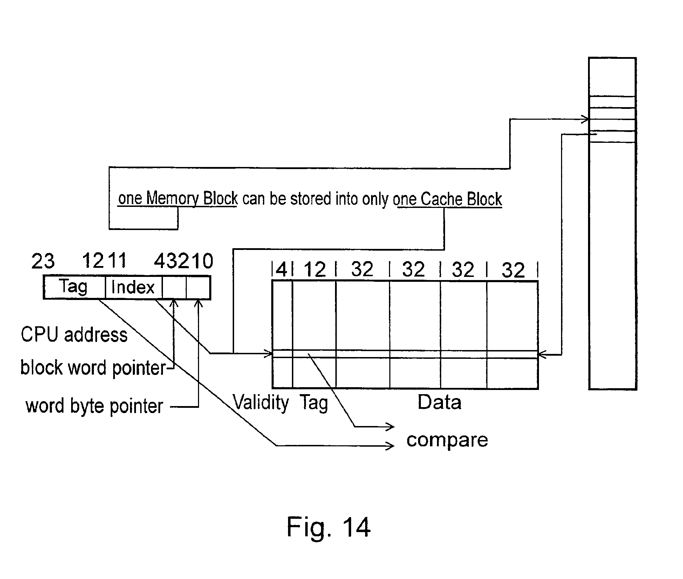

Figure 14 is a flow diagram illustrating how a block of main memory is mapped into cache memory in a direct mapped Cache organization. A disadvantage of the direct-mapped Cache when associated with a processor is that the Cache hit ratio drops sharply if two or more blocks, used alternatively, happen to map onto the same block in Cache. This causes a phenomenon known as "thrashing," where two (or more) blocks continuously replace each other within the Cache, with the subsequent loss in performance. The possibility of this is relatively low in a uni-processor system if such blocks are relatively far apart in the processor address space. The problem can usually be relatively easily overcome on the processor design when assembler coding is manually performed.

The architecture of the Cache Controller provides parallel access to improve the throughput. This means that the address tags and the data will be accessed at the same time and then enabled onto the bus only if the address tag matches that stored in memory and the validity bits are validated, rather than using the address tag as an enable to the data RAMs.

The direct mapped Cache has the advantage of a trivial replacement algorithm by avoiding the overhead of record keeping associated with a replacement rule. Of all the blocks that can map into a Cache block only one can actually be in the Cache at a time. Hence if a block causes a miss, the controller simply determines the Cache block this block maps onto and replaces the block in that Cache block. This occurs even when the Cache is not full.

In this embodiment, External memory 830 is mapped onto the Cache memory. However, internal SARAM 812 is mapped above the External Memory and is not cacheable. Code, for example interrupt routines, can be DMAed from the External memory into the internal SARAM and the vector table rebuilt so that there is no problem of consistency.

Since the Cache of this embodiment is solely an instruction Cache, with no self modifying code there is not a problem with consistency of data within the Cache to that in the external memory.

In this embodiment, no data on the External Memory or the Internal Memory is cacheable, nor are there any self modifying instructions. Hence no write policy is needed for non-test port transactions as there is no need to write back to the Cache.

A CPU Status Register (ST3) contains three bits to control the Cache: gl_cacheenable (Cache enable), gl_cachefreeze (Cache freeze) and gl_cacheclr (Cache clear). They are described below.

Cache enable (gl_cacheenable) bit: The Cache enable signal 1210a is not sent to the Cache block, but it is only sent to the Internal Memory Interface (MIF) module, where it is used as a switch off mechanism for the Cache. When it is active, program fetches will either occur from the Cache, from the internal memory system, or from the direct path to external memory, via the MMI, depending on the program address decoding performed in the MIF block. When it is inactive, the Cache Controller will never receive a program request, hence all program requests will be handled either by the internal memory system or the external memories via the MMI depending on the address decoding.

The Cache flushing is controlled by the gl_cacheenable bit. It is set there as it's behaviour is required to be atomic with the main processor. This is because when the Cache is disabled / enabled, the contents of the pre-fetch queue in the CPU must be flushed, so that there is no fetch advance, i.e. no instructions in the pipeline after the instruction being decoded (the Cache enable instruction). Otherwise the correct behaviour of the processor cannot be guaranteed.

The Cache enable functionality is honoured by the emulation hardware during emulation reads. However when the Cache is disabled, if the external memory entry to be overwritten is present in the Cache, the relevant Cache line is flushed.

Cache clear (gl_cacheclr) bit, signal 1210b: The Cache can be cleared (all blocks are invalid) with an external command.

Cache Freeze (gl_cachefreeze) bit, signal 1210c: The Cache Freeze signal provides a mechanism whereby the Cache can be locked, so that it's contents are not updated on a Cache miss, but it's contents are still available for Cache hits. This means that a block within a "frozen" Cache is never chosen as a victim of the replacement algorithm; its contents remain undisturbed until the gl_cachefreeze status is changed.

This means that any code loop that was outside of the Cache when it was "frozen" will remain outside the Cache, and hence there will be the cycle loss associated with a Cache miss, every time the code is called. Hence this feature should be used with caution, so as not to impact the performance of the processor. Advantageously, benchmarking of cache miss events according to the present invention can be used to determine when cycle loss is occurring due to freezing so that a corresponding section of software code can be optimised for better performance.

The Cache freeze functionality is not honoured by the emulation hardware. Hence when the Cache is frozen, if the external memory entry to be overwritten is present in the Cache, the relevant Cache line is flushed.

As disclosed above, the design of Cache 814 is based on the fact of it being an instruction only Cache with no self modifying instructions. Thus, Cache coherency is a non-existent task in this embodiment as the Cache needs to be read only, and no bus snooping mechanisms need to exist. However, for emulation purposes, it is advantageous to maintain coherency, such as for break point insertion. The two most common scenarios for handling breakpoints with an Instruction Cache are to either: turn off the Cache, or flush the entire Cache. However, these techniques are not well suited for the debug of real-time code. For example, the time impediment for turning the Cache off could be too high, especially if debugging from external Flash memory. Also the time required to flush the Cache and then reload it with existing loops (for example) may be too great.

According to an aspect of the present invention, Cache 814 is provided with coherence control circuitry to only flush the relevant Cache line. This could be performed in two ways. In order to avoid checking cache tags on every write cycle, an emulation flag signal is asserted during breakpoint write transactions. Thus, the Cache only responds to writes on the E-bus flagged as emulation by the gl_dmapw_tr signal. For a breakpoint instruction, estop(), writes are byte writes, but other emulation writes could be the same as any data write on the E (and F buses - for 32 bit writes). 8/16/32 bit emulation writes are all be supported.

Coherency must be maintained with the IBU, i.e. the Cache flushing must be atomic. For this the IBU is flushed (i.e. it's pointers must be reset) at the same time as the Cache line is flushed.

The Cache also supports emulation program reads. These will be performed on the program bus, and will be flagged by the gl_dmapr_tr signal. The Cache will respond to this by reading from the relevant address. However if the relevant location is not present in the Cache, the Cache will fetch externally, but not update the Cache contents when the required program data is returned. Thus, it works in the same mode as for Cache freeze.

Emulation signals are tabulated in Table 6.

**Table 6 - Emulation Signals**

| Function | Signal | Type | Notes |
|---|---|---|---|
| Emulation module | gl_dmapw_tr | I/P | This signifies that the write on the e-bus is an emulation write. Hence the Cache must monitor the address and flush the relevant line if it is in the Cache. |
| | gl_dmapr_tr | I/P | This signifies that the read on the program bus is an emulation read. Hence the Cache must respond if the data is within the Cache and fetch externally if the data is not in the Cache and return the fetched data to the CPU. However in the latter case the Cache contents will not be updated, i.e. it acts as if the Cache was in Cache freeze mode. |
| | cache_dmapr_tr | O/P | This signifies that the read on the Cache program address bus is an emulation read and that the MMI should react appropriately. |
| | cache_miss_nf | O/P | Indicates that the last access from the CPU to the Cache was a miss. Used by the emulation hardware to count the number of misses, which is necessary for code profiling |

Table 7 lists the cache register memory map. All of the configuration registers are 16 bit. These registers are accessed via Rbus 862. Since the Cache external bus registers are mapped on a word basis and are only accessible in word accesses from the external Bus, the following Cache Controller Memory Map tabulates the word offset from the Cache base address for each of the Cache registers.

**Table 7 - Cache Register Memory Map**

| Area | Word offset from Cache base (hex) | Access | Register |
|---|---|---|---|
| Global Control | 00 | None | Reserved |
| | 01 | 2 bit W/R | Burst Configuration |
| Test Registers | 08 | 16 bit W/R | Cache Test Control Register |
| | 09 | 16 bit W/R | Cache Test Data Register |
| | 0A | 12 bit W/R | Cache Test Tag Register |
| | 0B | 4 bit W/R | Cache Test Status Register |
| Emulation | 10 | 5 bit R | Cache Emulation Register |

The Cache Emulation Register allows the emulation hardware to interrogate the Cache hardware and understand the size and organisation of the Cache. This allows the emulation functions to be generic. The Cache Emulation Register is illustrated in Table 8. However, in the present embodiment, the emulation software does not make use of this register. An advantage of embodiments of the present invention is that the emulation software does not need an understanding of the organisation of the cache as long as the cache line crossing rules are known and obeyed by the emulation access control software.

**Table 8 - Cache Emulation register (CAB_EMU) (Read)**

| Bit | Name | Function | Value at Reset |
|---|---|---|---|
| 1:0 | ORG_CODE | Organisation Code bits | 00 |
| | | 00 - Direct-mapped | |
| | | 01 - 2-way set-associative | |
| | | 10 - 4-way set-associative | |
| | | 11 - 8-way set-associative | |
| 4:2 | SIZ_CODE | Size Code bits | 001 |
| | | 000 - 1k word | |
| | | 001 - 2k word | |
| | | 010 - 4k word | |
| | | 011 - 8k word | |
| | | 100 - 16k word | |
| | | 101 - 32k word | |
| | | 110 - 64k word | |
| | | 111 - 128k word | |
| 15:5 | | Unused | |

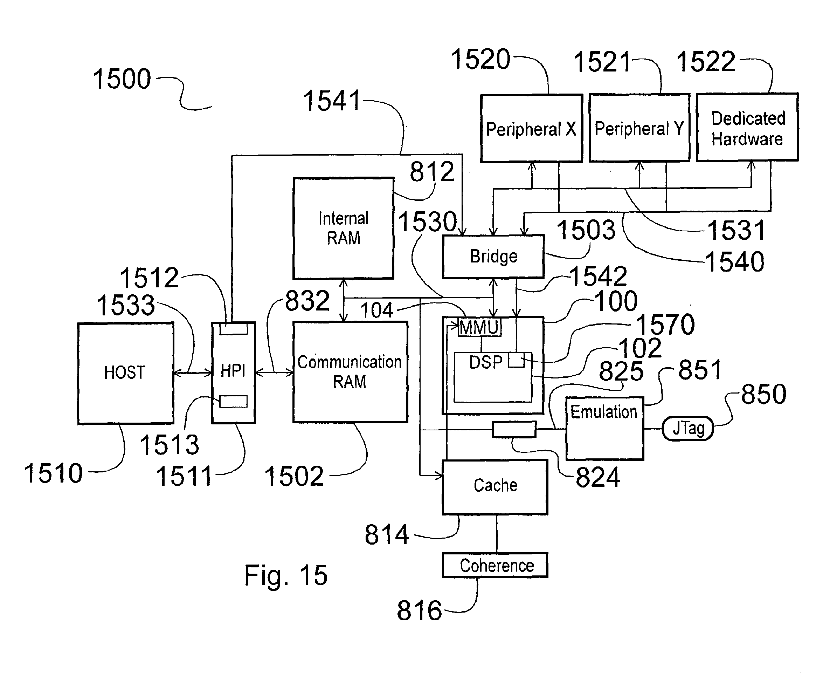

Figure 15 is a block diagram illustrating an alternative embodiment of a digital system with DSP 100, according to aspects of the present invention. Digital system 1500 includes processor 100, as described earlier, and a second processor referred to as host processor 1510.

DSP core 100 performs digital signal processing related tasks, while host processor 1510 performs other application tasks. DSP 100 is connected to an internal program memory circuit 812 and to a dual ported communication memory circuit 1502 via bus 1530. Bridge 1503 is also connected to bus 1530 and provides access to peripherals 1520 and 1521 via bus 1531. Access is also provided via bus 1531 to dedicated hardware 1522, which includes various devices and circuits, such as timers, power controls, debugging and emulation circuitry, and such. Interrupt request signals 1540 provide interrupt requests from devices 1520-1522 to DSP 100.

Internal cache 814 provides faster instruction access time for processor 100. Emulation circuitry 851 with JTAG interface 850 and benchmark circuitry 852 was described earlier. Cache miss signal 816 provides benchmark events which are recorded by benchmark circuitry 852. Window circuitry 824 provides window enable signal 825, as explained earlier.

Host processor 1510 is connected to host processor interface circuit (HPI) 1511 via bus 1533. HPI 1511 provides buffering and timing control to allow host processor 1510 to access communication memory circuit 1502 via bus 1532. In this manner, host processor 1510 can store and access data values in communication memory 1502 that can also be stored and accessed by DSP 100. Bus 1532 is separate from bus 1530 and communication memory 1502 is arranged such that host processor 1510 can access data values in dual ported memory circuit 1502 in a manner that does not impinge on the operation of memory circuit 812. Interrupt request signals 1541 provide interrupt requests from host processor 1510 to DSP 100.

Host Port Interface 1511 has two registers, an interrupt register 1512 for asserting interrupt requests and status register 1513 for the HPI operational modes. Both registers are accessible by host 1510 via bus 1533. Interrupt register 1512 is operable to assert host interrupt requests to processor 100 in response to a write transaction from host 1510.

In multiprocessing systems, such as system 1500, cache miss ratio is a key benchmark measure to monitor. Keeping the system running during benchmark monitoring with the use of embedded circuitry 850-852 is advantageous. Other sources of performance degradation, such as fetch bandwidth limitation, memory conflicts, and pipeline protection conflicts can also be monitored using benchmark circuitry 852.

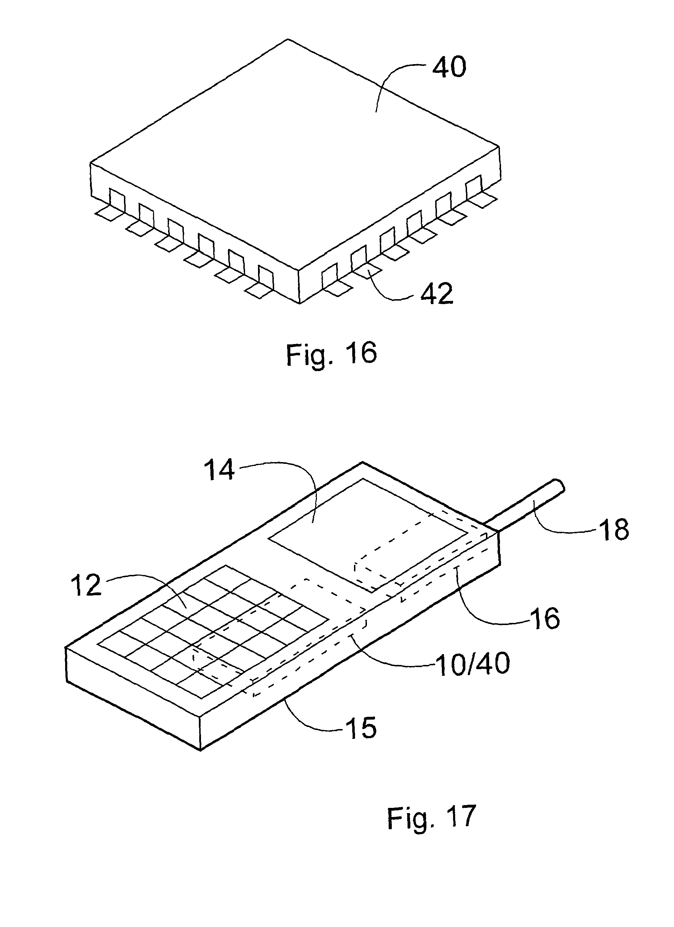

Figure 16 is a schematic representation of an integrated circuit incorporating processor 100. As shown, the integrated circuit includes a plurality of contacts for surface mounting. However, the integrated circuit could include other configurations, for example a plurality of pins on a lower surface of the circuit for mounting in a zero insertion force socket, or indeed any other suitable configuration.

Figure 17 illustrates an exemplary implementation of an example of such an integrated circuit in a mobile telecommunications device, such as a mobile telephone with integrated keyboard 12 and display 14. As shown in Figure 17, the digital system 10 with processor 100 is connected to the keyboard 12, where appropriate via a keyboard adapter (not shown), to the display 14, where appropriate via a display adapter (not shown) and to radio frequency (RF) circuitry 16. The RF circuitry 16 is connected to an aerial 18.

Fabrication of data processing device 100 involves multiple steps of implanting various amounts of impurities into a semiconductor substrate and diffusing the impurities to selected depths within the substrate to form transistor devices. Masks are formed to control the placement of the impurities. Multiple layers of conductive material and insulative material are deposited and etched to interconnect the various devices. These steps are performed in a clean room environment.

A significant portion of the cost of producing the data processing device involves testing. While in wafer form, individual devices are biased to an operational state and probe tested for basic operational functionality. The wafer is then separated into individual dice which may be sold as bare die or packaged. After packaging, finished parts are biased into an operational state and tested for operational functionality.

An alternative embodiment of the novel aspects of the present invention may include other circuitries which are combined with the circuitries disclosed herein in order to reduce the total gate count of the combined functions. Since those skilled in the art are aware of techniques for gate minimization, the details of such an embodiment will not be described herein.

Thus, there has been described a processor that is a programmable digital signal processor (DSP), offering both high code density and easy programming. Architecture and instruction set are optimized for low power consumption and high efficiency execution of DSP algorithms, such as for wireless telephones, as well as pure control tasks. The processor includes an instruction buffer unit, and a data computation unit for executing the instructions decoded by the instruction buffer unit. Instructions can be executed in a parallel manner, either in response to implicit parallelism or in response to user defined parallelism. An instruction cache is provided to minimize instruction access time. The instruction cache is provided with coherency circuitry so that an instruction read or write performed by emulation circuitry will be performed in a coherent manner.

Cache coherence is maintained automatically by hardware for any debug port accesses. Debug port writes are typed so that only the effected cache (data or instruction) is effected. The present embodiment only supports an instruction cache, but alternative embodiments may have multiple instruction caches, data caches, etc. Debug reads will return a cache value if the read address matches that stored in the cache tag; otherwise debug reads will return the main memory value without filling the cache. A cache miss originated from a debug access isn't taken into account for cache miss profiling.

Debug writes will invalidate a cache value if the write address matches that stored in the cache tag. A debug write proceeds to main memory normally regardless of the state of the cache.

Debug access support all native CPU sizes : 8, 16 or 32 bit accesses.

Simple rules are used by debug port software so that accesses do not cross cache lines in this embodiment. An alternative embodiment can have more complicated cache addressing features.

Debug access can be performed while the CPU is running; the CPU arbitrates simultaneous CPU and debug port accesses. If a debug access occurs when an application cache clear is pending, the request is re-directed to external memory regardless of the tag value.

In an alternative embodiment, a view of cache contents instead of main memory or main memory instead of cache contents can be provided by extending types.

In the present embodiment, DT-DMA writes override user cache settings to force invalidate on write even while the cache is locked. In an alternative embodiment, a DT-DMA request could override or honor user cache settings such as cache enable, cache lock, etc, based on a status / control bit, for example.

In an alternate embodiment, additional type signals could increase types to support multiple caches. In the present embodiment, types signals are included within write address bus EAB and are responsive to the emulation circuitry. In an alternate embodiment, type signals could be connected directly between the emulation circuitry and the coherence circuitry. Alternatively, a type signal could be included in the program address bus PAB. Alternatively, a type signal could be included with an instruction word or with a data word, instead of with an address.

Advantageously, DT-DMA accesses can be performed without stopping the execution of code, so that the system environment, memory access conflicts and priorities are not changed.

As used herein, the terms "applied," "connected," and "connection" mean electrically connected, including where additional elements may be in the electrical connection path.

While the invention has been described with reference to illustrative embodiments, this description is not intended to be construed in a limiting sense. Various other embodiments of the invention will be apparent to persons skilled in the art upon reference to this description. It is therefore contemplated that the appended claims will cover any such modifications of the embodiments as fall within the true scope of the invention.

## Claims

1. A digital system comprising a microprocessor, wherein the microprocessor is operable to execute a sequence of instructions obtained from an instruction bus connected to an instruction memory circuit, wherein the microprocessor comprises:
an instruction buffer unit operable to decode a first instruction of the sequence of instructions;
program counter circuitry for providing a first instruction address that identifies the first instruction in the sequence of instructions to be decoded by the instruction buffer unit;
cache circuitry operable to store a copy of the first instruction, wherein the cache circuitry is connected to the program counter circuitry and further connected to the instruction bus, the cache circuitry being operable to provide the first instruction to the instruction buffer unit in response to the first instruction address from the program counter circuitry or to otherwise assert a miss signal if the first instruction is not stored in the cache; **characterised by**
emulation circuitry connected to the instruction bus operable to cause a selected instruction to be read from or written to the instruction memory in response to an external host;
wherein the emulation circuitry is operable to read or write the selected instruction while the microprocessor executes the sequence of instructions;
said coherency circuitry being connected to the cache, the coherency circuitry being operable to maintain coherency in the cache in response to the selected instruction being read or written in response to the emulation circuitry); wherein
said coherency circuitry is operable to invalidate a cache entry when the selected instruction is written in response to the emulation circuitry if an address of the selected instruction matches the cache entry
writing a selected instruction further comprises flushing the instruction buffer unit in order to maintain coherency with the cache if an entry in the cache is invalidated; and
reading or writing a selected instruction can be directed to either override or honor cache circuitry control settings.

2. The digital system according to claim 1, wherein the cache is operable to provide the selected instruction if the selected instruction is present in the cache, otherwise the selected instruction is provided on the instruction bus from the instruction memory circuit and the coherency circuitry prevents the cache from storing the selected instruction as a miss, such that coherency is maintained when the selected instruction is read in response to the emulation circuitry.

3. The digital system according to any preceding claim being a cellular telephone, further comprising:
an integrated keyboard (12) connected to the processor via a keyboard adapter;
a display (14), connected to the processor via a display adapter;
radio frequency (RF) circuitry (16) connected to the processor; and
an aerial (18) connected to the RF circuitry.

4. A method of operating a digital system comprising a microprocessor, wherein the microprocessor is operable to execute a sequence of instructions, comprising the steps of:
providing a first instruction address that identifies a first instruction in the sequence of instructions to be decoded by an instruction buffer unit;
accessing the first instruction from a cache circuitry if the first instruction is present in the cache circuitry or indicating that a cache miss event occurred if the first instruction is not present in the cache circuitry;
updating the cache if a miss event occurs by accessing the first instruction from an instruction memory circuit and storing the first instruction in the cache circuitry;
decoding the first instruction of the sequence of instructions in the instruction buffer unit;
repeating the steps of providing, accessing, updating and decoding to execute the sequence of instructions; **characterized in**
reading or writing a selected instruction during execution of the sequence of instructions in response to a request by an emulation circuitry connected to an external host in such a manner that coherency of the cache circuitry is maintained a tag signal line being connected to said coherency circuitry such that the emulation circuitry is operable to indicate when the selected instruction is being written via the tag signal line;
wherein the step of writing a selected instruction comprises the steps of:
writing the selected instruction to the instruction memory circuit;
invalidating an entry in the cache circuitry if an address of the selected instruction matches the entry in the cache circuitry in order to maintain coherency of the cache;
wherein the step of; and
wherein the step of.

5. The method of claim 4, wherein the step of reading a selected instructions comprises the steps of:
accessing the selected instructions from the cache circuitry if the selected instruction is present in the cache circuitry; and
accessing the first instruction from the instruction memory circuit if the selected instruction is not present in the cache circuitry and maintaining coherency in the cache circuitry by not storing the selected instruction in the cache circuitry.

## Patentansprüche

1. Digitalsystem, umfassend einen Mikroprozessor, der zur Ausführung einer Folge von Befehlen geeignet ist, die dieser über einen Befehlsbus, der mit einem Befehlsspeicherschaltkreis verbunden ist, bezogen hat, wobei der Mikroprozessor umfasst:
eine Befehlszwischenspeichereinheit, die dazu geeignet ist, einen ersten Befehl der Folge von Befehlen zu dekodieren,
eine Befehlszählerschaltung zur Bereitstellung einer ersten Befehlsadresse, die den ersten Befehl in der Folge von Befehlen, welche mit der Befehlsspeichereinheit dekodiert werden sollen, kennzeichnet,
eine Zwischenspeicherschaltung, die zum Speichern einer Kopie des ersten Befehles geeignet ist, wobei die Zwischenspeicherschaltung mit der Befehlszählerschaltung und außerdem mit dem Befehlsbus verbunden ist, und
wobei die Zwischenspeicherschaltung geeignet ist, der Befehlszwischenspeichereinheit als Antwort auf die erste Befehlsadresse von der Befehlszählerschaltung einen ersten Befehl zur Verfügung zu stellen oder anderenfalls ein Abwesenheitssignal zu setzen, wenn der erste Befehl nicht in dem Zwischenspeicher gespeichert ist, **gekennzeichnet durch**
eine mit dem Befehlsbus verbundene Emulationsschaltung, die dazu geeignet ist, dass in Reaktion auf einen externen Host ein ausgewählter Befehl aus dem Befehlsspeicher gelesen oder in den Befehlsspeicher geschrieben wird,
wobei die Emulationsschaltung dazu geeignet ist, den ausgewählten Befehl zu lesen oder zu schreiben, während der Mikroprozessor eine Folge von Befehlen ausführt,
wobei diese Kohärenzschaltung dazu geeignet ist, einen Eintrag in dem Zwischenspeicher für ungültig zu erklären, wenn der ausgewählte Befehl in Reaktion auf die Emulationsschaltung geschrieben wird und wenn die Adresse des ausgewählten Befehles mit dem Eintrag des Zwischenspeichers übereinstimmt,
wobei der Schritt des Schreibens eines ausgewählten Befehles das Leeren der Befehlszwischenspeichereinheit umfasst, um die Kohärenz mit dem Zwischenspeicher aufrecht zu erhalten, wenn ein Eintrag in dem Zwischenspeicher für ungültig erklärt wird,
und wobei der Schritt des Lesens oder Schreibens eines ausgewählten Befehles darauf gerichtet sein kann, die Kontrollparameter der Zwischenspeicherschaltung entweder zu überschreiben oder zu akzeptieren.

2. Digitalsystem nach Anspruch 1, bei dem der Zwischenspeicher dazu geeignet ist, den ausgewählten Befehl zur Verfügung zu stellen, sofern der ausgewählte Befehl im Zwischenspeicher vorhanden ist, und anderenfalls den ausgewählten Befehl über den Befehlsbus aus dem Befehlsspeicherschaltkreis zur Verfügung zu stellen, wobei der Kohärenzschaltkreis verhindert, dass der ausgewählte Befehl als fehlend in dem Zwischenspeicher gespeichert wird, so dass die Kohärenz gewahrt bleibt, wenn der ausgewählte Befehl in Reaktion auf die Emulationsschaltung gelesen wird.

3. Digitalsystem nach einem der vorstehenden Ansprüche, wobei dieses ein Mobiltelefon ist und außerdem umfasst:
eine über einen Tastaturadapter mit dem Prozessor verbunde integrierte Tastatur (12),
eine über einen Anzeigeadapter mit dem Prozessor verbunde Anzeige (14),
einen mit dem Prozessor verbunden Funkfrequenzschaltkreis (16) und
eine mit dem Funkfrequenzschaltkreis verbundene Antenne (18).

4. Verfahren zum Betrieb eines Digitalsystems mit einem Mikroprozessor, der zur Ausführung einer Folge von Befehlen geeignet ist, die folgenden Schritte umfassend:
Bereitstellen einer ersten Befehlsadresse, die einen ersten Befehl der von einer Befehlsspeichereinheit zu dekodierenden Folge von Befehlen kennzeichnet,
Abrufen des ersten Befehls aus dem Zwischenspeicherschaltkreis, wenn der erste Befehl in dem Zwischenspeicherschaltkreis vorhanden ist, oder Anzeigen eines Abwesenheitsereignisses, wenn der erste Befehl nicht in dem Zwischenspeicherschaltkreis vorhanden ist,
Aktualisieren des Zwischenspeichers, wenn ein Abwesenheitsereigniss stattfindet, indem der erste Befehl aus dem Befehlsspeicherschaltkreis abgerufen und der erste Befehl in dem Zwischenspeicherschaltkreis gespeichert wird,
Dekodieren des ersten Befehls der Folge von Befehlen in der Befehlsspeichereinheit,
Wiederholen der Schritte des Bereitstellens, Abrufens, Aktualisierens und Dekodierens zur Ausführung einer Folge von Befehlen, **gekennzeichnet durch**
Lesen oder Schreiben eines ausgewählten Befehls während der Ausführung der Folge von Befehlen in Reaktion auf eine Anfrage eines Emulationsschaltkreises, der mit einem externen Host so verbunden ist, dass die Kohärenz des Zwischenspeichers aufrecht erhalten wird,
wobei eine Markierungs-Signal-Verbindung mit diesem Kohärenzschaltkreis derart verbunden ist, dass die Emulationsschaltung dazu geeignet ist anzuzeigen, wenn der ausgewählte Befehl über die Markierungs-Signal-Verbindung geschrieben wird,
wobei der Kohärenzschaltkreis mit dem Zwischenspeicher verbunden und dazu geeignet ist, in Reaktion darauf, dass die ausgewählte Entscheidung in Reaktion auf den Emulationsschaltkreis gelesen oder geschrieben wird, Kohärenz aufrecht zu erhalten, wobei der Schritt des Schreibens eines ausgewählten Befehles die folgenden Schritte umfasst:
Schreiben des ausgewählten Befehles in den Befehlsspeicher,
für ungültig Erklären eines Eintrags des Zwischenspeicherschaltkreises, sofern eine Adresse des ausgewählten Befehles mit dem Eintrag in dem Zwischenspeicherschaltkreis übereinstimmt, um die Kohärenz des Zwischenspeichers aufrecht zu erhalten.

5. Verfahren nach Anspruch 4, wobei der Leseschritt eines ausgewählten Befehles die folgenden Schritte umfasst:
Abrufen des ausgewählten Befehles aus dem Zwischenspeicherschaltkreis, sofern der ausgewählte Befehl in dem Zwischenspeicherschaltkreis vorhanden ist und
Abrufen des ersten Befehles aus der Befehlsspeicherschaltung, wenn der ausgewählte Befehl in der Zwischenspeicherschaltung nicht vorhanden ist, und Aufrechterhalten der Kohärenz der Zwischenspeicherschaltung, indem der ausgewählte Befehl in der Zwischenspeicherschaltung nicht gespeichert wird.

## Revendications

1. Système numérique comprenant un microprocesseur, où le microprocesseur est utilisable pour exécuter une séquence d'instructions obtenues à partir d'un bus d'instruction relié à un circuit de mémoire d'instruction, où le microprocesseur comprend :
une unité de mémoire tampon d'instruction utilisable pour décoder une première instruction de la séquence d'instructions ;
un circuit de compteur de programme pour fournir une adresse de première instruction qui identifie la première instruction dans la séquence d'instructions devant être décodée par l'unité de mémoire tampon d'instruction ;
un circuit de mémoire cache utilisable pour stocker une copie de la première instruction, où le circuit de mémoire cache est relié au circuit de compteur de programme et est également relié au bus d'instruction, le circuit de mémoire cache étant utilisable pour fournir la première instruction à l'unité de mémoire tampon d'instruction en réponse à l'adresse de première instruction à partir du circuit de compteur de programme ou autrement pour affirmer un signal de réponse non pertinente si la première instruction n'est pas stockée dans la mémoire cache ;
**caractérisé par**
un circuit d'émulation relié au bus d'instruction utilisable pour lire ou écrire une instruction sélectionnée dans la mémoire d'instruction en réponse à un hôte externe ;
où le circuit d'émulation est utilisable pour lire ou écrire l'instruction sélectionnée tandis que le microprocesseur exécute la séquence d'instructions ;
où ledit circuit de cohérence est utilisable pour invalider une entrée de mémoire cache quand l'instruction sélectionnée est écrite en réponse au circuit d'émulation si une adresse de l'instruction sélectionnée correspond à l'entrée de mémoire cache ;
l'écriture d'une instruction sélectionnée consiste en outre à vider l'unité de mémoire tampon d'instruction afin de maintenir la cohérence avec la mémoire cache si une entrée dans la mémoire cache est invalidée ; et
la lecture ou l'écriture d'une instruction sélectionnée peut être orientée pour contourner ou reconnaître des paramètres de commande de circuit de mémoire cache.

2. Système numérique selon la revendication 1, où la mémoire cache est utilisable pour fournir l'instruction sélectionnée si l'instruction sélectionnée est présente dans la mémoire cache, autrement l'instruction sélectionnée est envoyée sur le bus d'instruction par le circuit de mémoire d'instruction et le circuit de cohérence empêche la mémoire cache de stocker l'instruction sélectionnée en tant qu'une réponse non pertinente, de sorte que la cohérence est maintenue quand l'instruction sélectionnée est lue en réponse au circuit d'émulation.

3. Système numérique selon l'une quelconque des revendications précédentes qui est un téléphone cellulaire, comprenant en outre :
un clavier intégré (12) relié au processeur par un adaptateur de clavier ;
un affichage (14), relié au processeur par un adaptateur d'affichage ;
un circuit (16) radiofréquence (RF) relié au processeur ; et
une antenne (18) reliée au circuit RF.

4. Procédé d'utilisation d'un système numérique comprenant un microprocesseur, où le microprocesseur est utilisable pour exécuter une séquence d'instructions, comprenant les étapes consistant à :
fournir une adresse de première instruction qui identifie une première instruction dans la séquence d'instructions devant être décodée par une unité de mémoire tampon d'instruction ;
accéder à la première instruction à partir d'un circuit de mémoire cache si la première instruction est présente dans le circuit de mémoire cache ou indiquer qu'un événement de réponse non pertinente de mémoire cache a eu lieu si la première instruction n'est pas présente dans le circuit de mémoire cache ;
mettre à jour la mémoire cache si un événement de réponse non pertinente a lieu en accédant à la première instruction à partir d'un circuit de mémoire d'instruction et stocker la première instruction dans le circuit de mémoire cache ;
décoder la première instruction de la séquence d'instructions dans l'unité de mémoire tampon d'instruction ;
répéter les étapes consistant à fournir, accéder, mettre à jour et décoder pour exécuter la séquence d'instruction ; **caractérisé par**
la lecture ou l'écriture d'une instruction sélectionnée durant l'exécution de la séquence d'instruction en réponse à une requête par un circuit d'émulation relié à un hôte externe d'une manière telle que la cohérence du circuit de mémoire cache est maintenue
une ligne de transmission d'étiquette étant reliée audit circuit de cohérence de sorte que le circuit d'émulation soit utilisable pour indiquer quand l'instruction sélectionnée est écrite par la ligne de transmission d'étiquette ;
ledit circuit de cohérence étant relié à la mémoire cache, le circuit de cohérence étant utilisable pour maintenir la cohérence dans la mémoire cache en réponse à l'instruction sélectionnée qui est lue ou écrite en réponse au circuit d'émulation ;
où l'étape d'écriture d'une instruction sélectionnée comprend les étapes consistant à :
écrire l'instruction sélectionnée dans le circuit de mémoire d'instruction ;
invalider une entrée dans le circuit de mémoire cache si une adresse de l'instruction sélectionnée correspond à l'entrée dans le circuit de mémoire cache afin de maintenir la cohérence de la mémoire cache ;
où l'étape d'écriture d'une instruction sélectionnée consiste en outre à vider l'unité de mémoire tampon d'instruction afin de maintenir la cohérence avec la mémoire cache si une entrée dans la mémoire cache est invalidée ; et
où l'étape de lecture ou d'écriture d'une instruction sélectionnée peut être orientée pour contourner ou reconnaître des paramètres de commande de circuit de mémoire cache.

5. Procédé selon la revendication 4, où l'étape de lecture d'une instruction sélectionnée comprend les étapes consistant à :
accéder à une instruction sélectionnée à partir du circuit de mémoire cache si l'instruction sélectionnée est présente dans le circuit de mémoire cache ; et
accéder à la première instruction à partir du circuit de mémoire d'instruction si l'instruction sélectionnée n'est pas présente dans le circuit de mémoire cache et maintenir la cohérence dans le circuit de mémoire cache en ne stockant pas l'instruction sélectionnée dans le circuit de mémoire cache.
